# EUROPEAN PATENT APPLICATION

(11) **EP 3 845 503 A1**
(43) Date of publication of application: **07.07.2021**
(21) Application number: 19854935.4
(22) Date of filing: 27.08.2019
(51) Int. Cl.: C03C 3/068, C03C 17/34, G02B 1/00, G02B 1/115

(54) **OPTICAL GLASS AND OPTICAL COMPONENT**

(30) Priority: 31.08.2018 JP 2018163582; 21.11.2018 JP 2018218577
(71) Applicant: AGC INC., Chiyoda-ku, Tokyo 1008405 (JP)
(72) Inventor: AMMA, Shinichi, Tokyo 100-8405 (JP); KITAOKA, Kenji, Tokyo 100-8405 (JP)
(74) Representative: Müller-Boré & Partner Patentanwälte PartG mbB
(86) International application number: PCT/JP2019/033490
(87) International publication number: WO 2020/045417

(57) **Abstract**

The present invention provides: an optical glass in which the refractive index (n_{d}) is 1.81-2.15, the density is not more than 6.0 g/cm³, the glass viscosity is 10¹dPa·s at a temperature T₁ of 900-1200°C, the devitrification temperature is not more than 1300°C, and the SiO₂ content rate expressed in mole percent on an oxide basis is 5-44%; and an optical component that uses the optical glass.

## Description

### TECHNICAL FIELD

The present invention relates to an optical glass and an optical component.

### BACKGROUND ART

Glass for use in wearable appliances, such as spectacles equipped with a projector, spectacle- or goggle-type displays, virtual-reality or augmented-reality display devices, and virtual-image display devices, is required to have a high refractive index from the standpoints of an increase in image display angle, increases in luminance and contrast, an improvement in lightguide property, easiness of processing for producing diffraction gratings, etc. Meanwhile, small-sized imaging glass lenses with a wide imaging angle of view have conventionally been used in applications such as in-vehicle cameras and visual sensors for robots, and such imaging glass lenses are required to have a high refractive index so as to be smaller and capable of wide-range imaging.

Optical glass for use in such applications is required to have a low density in order to make the user have a comfortable wear feeling or to enable the vehicle or robot, which is required to be reduced in weight, to have a reduced overall weight. Moreover, it is important for the optical glass to be less apt to suffer a surface deterioration or alteration due to acid rain, in view of outdoor uses, and due to chemicals such as detergents used for cleaning or waxes.

With respect to glass lenses for mounting on vehicles, an attempt has, for example, been made to attain increases in refractive index and strength and improvements in acid resistance and water resistance by using a lens glass material for in-vehicle cameras which has predetermined acid resistance (see, for example, Patent Literature 1).

### CITATION LIST

### PATENT LITERATURE

Patent Literature 1: JP-A-2013-256446

### SUMMARY OF INVENTION

### TECHNICAL PROBLEM

However, a composition for attaining a high refractive index has hitherto been frequently obtained using heavy-metal oxides as glass components. Because of this, high-refractive index glass typically has a high density.

Meanwhile, wearable appliances sometimes employ glass having a plate shape, and such glass is often produced by forming methods having high production efficiency, such as a float process, a fusion process, and a rolling-out process. Important for efficient production is a relationship between the temperature during the production and the viscosity of the glass.

In the case of use as an optical component, visible-light transmittance is also an important parameter. In the case of high-refractive index glass, melting at a high temperature may result in a decrease in visible-light transmittance especially on the shorter-wavelength side, while a steep viscosity curve makes it difficult to control viscosity in production.

The present invention has been achieved in order to solve the problems described above, and an object thereof is to provide an optical glass which has a high refractive index and a low density and has satisfactory production properties.

### SOLUTION TO PROBLEM

An optical glass of the present invention has: a refractive index (n_{d}) of 1.81 to 2.15, a density of 6.0 g/cm³ or less; a temperature T₁, at which a viscosity of the glass is 10¹ dPa·s, of 900°C to 1,200°C; a devitrification temperature of 1,300°C or lower; and a content of SiO₂ of 5% to 44% in mol% based on oxides.

An optical component of the present invention includes the optical glass of the present invention, in which the optical glass has a plate shape.

### BRIEF DESCRIPTION OF DRAWING

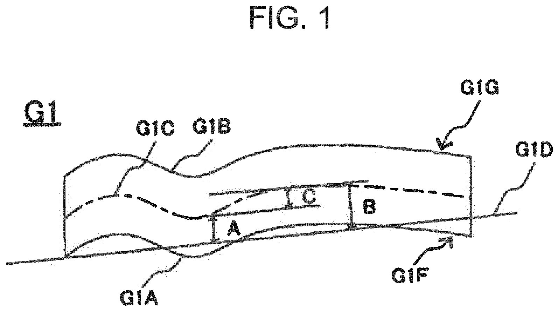

[FIG. 1] FIG. 1 is a cross-sectional view for illustrating a warpage of an optical glass.

### DESCRIPTION OF EMBODIMENTS

Embodiments of the optical glass and optical component of the present invention are described below.

The optical glass of the present invention has predetermined values of refractive index (n_{d}), density (d), and melting characteristics as shown above. These properties are explained below in order.

The optical glass of the present invention has a high refractive index (n_{d}) in the range of 1.81 to 2.15. Since the refractive index (n_{d}) is 1.81 or higher, the optical glass of the present invention is suitable as an optical glass for use in wearable appliances from the standpoints of an increase in image display angle, increases in luminance and contrast, an improvement in lightguide property, easiness of processing for producing diffraction gratings, etc. Furthermore, the optical glass of the present invention is suitable for use as a small imaging glass lens with a wide imaging angle for use in applications such as in-vehicle cameras and visual sensors for robots, since the imaging glass lens can have a smaller size and be capable of wide-range imaging. The refractive index (n_{d}) thereof is preferably 1.85 or higher, more preferably 1.88 or higher, still more preferably 1.91 or higher, still more preferably 1.94 or higher, still more preferably 1.97 or higher, still more preferably 1.99 or higher, still more preferably 2.00 or higher.

Meanwhile, glass having a refractive index (n_{d}) exceeding 2.15 tends to have an increased density and a high devitrification temperature. Especially in the case where it is important for the optical glass to have a low density, the refractive index (n_{d}) is preferably 2.10 or less, more preferably 2.06 or less, still more preferably 2.03 or less, still more preferably 2.01 or less, still more preferably 1.98 or less, still more preferably 1.95 or less, still more preferably 1.94 or less, yet still more preferably 1.92 or less.

The optical glass of the present invention has a density (d) of 6.0 g/cm³ or less. Since the optical glass of the present invention has a density within the aforementioned range, this optical glass, when used in a wearable appliance, can make the user have a comfortable wear feeling and, when used in in-vehicle cameras, visual sensors for robots, or the like, can reduce overall weight of devices. The density (d) is preferably 5.6 g/cm³ or less, more preferably 5.2 g/cm³ or less, still more preferably 4.8 g/cm³ or less, still more preferably 4.6 g/cm³ or less, still more preferably 4.4 g/cm³ or less, still more preferably 4.2 g/cm³ or less.

Meanwhile, from the standpoint of rendering the surfaces of the optical glass of the present invention less apt to suffer scratches, the density (d) is preferably 3.3 g/cm³ or higher. The density (d) is more preferably 3.6 g/cm³ or higher, still more preferably 3.9 g/cm³ or higher, still more preferably 4.2 g/cm³ or higher, still more preferably 4.4 g/cm³ or higher, yet still more preferably 4.7 g/cm³ or higher.

The optical glass of the present invention has a temperature T₁, at which a viscosity of the glass is 10¹ dPa·s, being in the range of 900°C to 1,200°C. T₁ is a reference temperature for melting characteristics. Glass having too high T₁ needs to be melted at high temperatures. In the case where such a glass is a high-refractive index glass, the glass may have a reduced visible-light transmittance especially on the shorter-wavelength side. The T₁ of the optical glass of the present invention is preferably 1,180°C or lower, more preferably 1,150°C or lower, still more preferably 1,130°C or lower, yet still more preferably 1,110°C or lower.

Meanwhile, too low T₁ results in a steep viscosity curve to cause a problem that viscosity control in production is difficult. Since the optical glass of the present invention has T₁ within the aforementioned range, this optical glass can have satisfactory producibility. The T₁ is preferably 950°C or higher, more preferably 1,000°C or higher, still more preferably 1,050°C or higher, still more preferably 1,080°C or higher, yet still more preferably 1,100°C or higher, especially preferably 1,120°C or higher.

The optical glass of the present invention has a devitrification temperature of 1,300°C or lower. Since the optical glass has such property, the glass can be inhibited from being devitrified when forming the glass, and thus the formability is satisfactory. The devitrification temperature is preferably 1,275°C or lower, more preferably 1,250°C or lower, still more preferably 1,225°C or lower, still more preferably 1,200°C or lower, still more preferably 1,175°C or lower, still more preferably 1,150°C or lower, still more preferably 1,125°C or lower, still more preferably 1,100°C or lower, still more preferably 1,075°C or lower, especially preferably 1,050°C or lower. The devitrification temperature is a lowest temperature at which no crystals of 1 µm or larger in terms of major-side of major-axis dimension are observed in the surface and inside of the glass when the glass having been heated and melted is allowed to cool naturally.

The optical glass of the present invention preferably has a glass transition point (Tg) of 600°C or higher. In the case where the optical glass of the present invention has Tg of 600°C or higher, the glass can be inhibited from suffering a deformation such as deflection, in processing. The Tg is more preferably 630°C or higher, still more preferably 660°C or higher, still more preferably 690°C or higher, still more preferably 720°C or higher, especially preferably 750°C or higher. In the case where the optical glass is formed by press forming, redraw forming, etc., Tg is preferably 800°C or lower. Tg is more preferably 760°C or lower, still more preferably 720°C or lower, yet still more preferably 680°C or lower, especially preferably 640°C or lower. Tg can be measured, for example, by a thermal expansion method.

It is preferable that the optical glass of the present invention, at the devitrification temperature, has a viscosity (devitrification viscosity) η which, when expressed in dPa·s unit, satisfies log η=0.4 or larger. In the case where the optical glass has such property, the glass can be inhibited from being devitrified when formed and has satisfactory formability. The viscosity thereof at the devitrification temperature more preferably satisfies log η=0.5 or larger, still more preferably satisfies log η=0.6 or larger, yet still more preferably satisfies log η=0.7 or larger. Especially preferably, log η is 0.8 or larger.

It is preferable that the optical glass of the present invention has an Abbe number (v_{d}) of 60 or less. In the case where the optical glass of the present invention is used as a glass plate such as a lightguide plate, the low v_{d} of this optical glass within the aforementioned range not only facilitates optical designs for wearable appliances but also makes improvements in chromatic aberration easy. This optical glass hence enables high-resolution pictures or images to be reproduced. The v_{d} is more preferably 50 or less, still more preferably 40 or less, still more preferably 38 or less, still more preferably 35 or less, yet still more preferably 32 or less, especially preferably 30 or less.

Meanwhile, it is preferable that the optical glass of the present invention has an Abbe number (v_{d}) of 15 or higher. Specifically, in the case where the optical glass of the present invention is used as a glass plate such as a lightguide plate, the high v_{d} of this optical glass within that range makes it easy to obtain refractive index matching to a resin to be applied to the surface. The v_{d} thereof is more preferably 18 or higher, still more preferably 21 or higher, still more preferably 23 or higher, still more preferably 25 or higher, yet still more preferably 27 or higher, especially preferably 29 or higher.

It is preferable that the optical glass of the present invention has a coefficient of thermal expansion (α) in 50 to 350°C of 50 to 150 (× 10⁻⁷ /K). In the case where the optical glass of the present invention has an α within that range, satisfactory expansion matching to peripheral members is achieved. In terms of the lower limit, the α is preferably 60 (×10⁻⁷ /K) or higher, more preferably 70 (×10⁻⁷ /K) or higher, still more preferably 80 (×10⁻⁷ /K) or higher, especially preferably 90 (×10⁻⁷ /K) or higher.

In addition, in the case where the optical glass of the present invention has an α within that range, this optical glass is less apt to crack when cooled and, hence, an increased cooling rate can be used. As a result, the difference (Tf-Tg) between the fictive temperature (Tf) and glass transition temperature (Tg) of the optical glass can be 0°C or larger, and this enables the optical glass to have a less dense structure so that even when an impact is given to the optical glass, the structure of the glass becomes dense so that the optical glass absorbs the impact more. As a result, the optical glass itself has improved strength and can be inhibited from being damaged due to falling, etc. In terms of the upper limit, the α is preferably 120 (×10⁻⁷ /K) or less, more preferably 110 (×10⁻⁷ /K) or less, still more preferably 100 (×10⁻⁷ /K) or less, especially preferably 95 (×10⁻⁷ /K) or less.

It is preferable that the optical glass of the present invention is a glass plate having a thickness of 0.01 mm to 2 mm. In the case where the thickness thereof is 0.01 mm or larger, this optical glass can be inhibited from being damaged in handling or processing. In addition, this optical glass can be inhibited from being bent by its own weight. The thickness thereof is more preferably 0.1 mm or larger, still more preferably 0.3 mm or larger, yet still more preferably 0.5 mm or larger. Meanwhile, in the case where the thickness thereof is 2 mm or less, optical elements employing this optical glass can be lightweight. The thickness thereof is more preferably 1.5 mm or less, still more preferably 1.0 mm or less, yet still more preferably 0.8 mm or less.

In the case where the optical glass of the present invention is a glass plate, it is preferable that one main surface thereof has an area of 8 cm² or larger. In the case where the area thereof is 8 cm² or larger, a large number of optical elements can be disposed on the glass plate, resulting in an improvement in production efficiency. The area thereof is more preferably 30 cm² or larger, still more preferably 170 cm² or larger, yet still more preferably 300 cm² or larger, especially preferably 1,000 cm² or larger. Meanwhile, in the case where the area thereof is 6,500 cm² or less, the glass plate is easy to handle and can be inhibited from being damaged in handling or processing. The area thereof is more preferably 4,500 cm² or less, still more preferably 4,000 cm² or less, yet still more preferably 3,000 cm² or less, especially preferably 2,000 cm² or less.

In the case where the optical glass of the present invention is a glass plate, it is preferable that one main surface thereof has an LTV (local thickness variation) for an area of 25 cm² of 2 µm or less. In the case where the one main surface has a flatness within that range, not only nanostructures of a desired shape can be formed on the main surface using imprinting, etc. but also desired lightguide properties can be obtained. In particular, in the case where the glass plate is a lightguide, a ghost phenomenon or strain due to a difference in optical path length can be prevented. The LTV thereof is more preferably 1.8 µm or less, still more preferably 1.6 µm or less, yet still more preferably 1.4 µm or less, especially preferably 1.2 µm or less.

It is preferable that the optical glass of the present invention, when assuming that the optical glass is a disk-shaped glass plate having a diameter of 8 inches, has a warpage of 50 µm or less. In the case where the warpage of the glass plate is 50 µm or less, not only nanostructures of a desired shape can be formed on one main surface thereof using imprinting, etc. but also desired lightguide properties are obtained. In the case where a plurality of lightguides are to be obtained, lightguides of satisfactory quality are stably obtained. The warpage of the glass substrate is more preferably 40 µm or less, still more preferably 30 µm or less, especially preferably 20 µm or less.

When assuming that the optical glass is a disk-shaped glass plate having a diameter of 6 inches, the warpage thereof is preferably 30 µm or less. In the case where the warpage of the glass plate is 30 µm or less, not only nanostructures of a desired shape can be formed on one main surface thereof using imprinting, etc. but also desired lightguide properties are obtained. In the case where a plurality of lightguides are to be obtained, lightguides of satisfactory quality are stably obtained. The warpage of the glass plate is more preferably 20 µm or less, still more preferably 15 µm or less, especially preferably 10 µm or less.

When assuming that the optical glass is a square glass plate in which each side has a length of 6 inches, the warpage thereof is preferably 100 µm or less. In the case where the warpage of the glass plate is 100 µm or less, not only nanostructures of a desired shape can be formed on one main surface thereof using imprinting, etc. but also desired lightguide properties are obtained. In the case where a plurality of lightguides are to be obtained, lightguides of satisfactory quality are stably obtained. The warpage of the glass plate is more preferably 70 µm or less, still more preferably 50 µm or less, still more preferably 35 µm or less, especially preferably 20 µm or less.

FIG. 1 is a cross-sectional view of an optical glass of the present invention, which is denoted by glass plate G1. "Warpage" is defined as follows. In any cross-section passing through the center of one main surface G1F of the glass plate G1 and perpendicular to the main surface G1F of the glass plate G1, a base line G1D and a center line G1C for the glass plate G1 are determined and the difference C between a maximum value B and a minimum value A of the vertical-direction distance between the base line G1D and the center line G1C is taken as the warpage.

The intersection line where the perpendicular cross-section meets the one main surface G1F of the glass plate G1 is referred to as bottom line G1A. The intersection line where the perpendicular cross-section meets the other main surface G1G of the glass plate G1 is referred to as top line G1B. The center line G1C is a line which connects thickness-direction center points of the glass plate G1. The center line G1C is calculated by determining midpoints, along the direction of laser irradiation which will be described later, between the bottom line G1A and the top line G1B.

A base line G1D is determined in the following manner. First, a bottom line G1A is calculated by a measuring method in which any influence of the weight of the glass plate G1 itself is eliminated. From the bottom line G1A, a straight line is determined by the least squares method. The determined straight line is the base line G1D. As the method in which any influence of the weight of the glass plate G1 itself is eliminated, a common method is used.

For example, one main surface G1F of the glass plate G1 is supported at three points. The glass plate G1 is irradiated with laser light using a laser displacement meter to measure the heights of the one main surface G1F and the other main surface G1G of the glass plate G1 from a base plane.

Next, the glass plate G1 is reversed and supported at three points located on the other main surface GIG which face the three points at which said one main surface G1F was supported, and the heights of said one main surface G1F and the other main surface G1G of the glass plate G1 from a base plane are measured.

The heights of each measurement point measured respectively before and after the reversal are averaged, thereby eliminating the influence of the weight of the glass plate G1 itself. For example, heights of the one main surface G1F are measured before reversal in the manner shown above. The glass plate G1 is reversed, and heights of the other main surface G1G are then measured in positions corresponding to the measurement points on said one main surface G1F. Likewise, heights of the other main surface G1G are measured before reversal. After the glass plate G1 is reversed, heights of said one main surface G1F are measured in positions corresponding to the measurement points on the other main surface G1G.

The warpage is measured, for example, with a laser displacement meter.

In the optical glass of the present invention, it is preferable that one main surface thereof has a surface roughness Ra of 2 nm or less. In the case where the one main surface has an Ra within that range, not only nanostructures of a desired shape can be formed on the main surface using imprinting, etc. but also desired lightguide properties are obtained. In particular, in the case where the glass plate is a lightguide, irregular reflection can be inhibited from occurring at the interfaces and a ghost phenomenon or strain can be prevented. The Ra thereof is more preferably 1.7 nm or less, still more preferably 1.4 nm or less, yet still more preferably 1.2 nm or less, especially preferably 1 nm or less. The surface roughness Ra is the arithmetic average roughness defined in JIS B0601 (year 2001). In this description, the surface roughness Ra is a value determined through an examination of a 10 µm × 10 µm area with an atomic force microscope (AFM).

### [Glass Components]

One embodiment of content ranges for components that can be contained in the optical glass of the present invention is described in detail below. In this description, the content of each component is indicated in mol% based on oxides unless otherwise noted. The expression "containing substantially no X" used for the optical glass of the present invention means that the glass does not contain X except the X included in unavoidable impurities. The content of unavoidable impurities is 0.1 % or less in the present invention.

A composition of the optical glass according to this embodiment which satisfies the properties described above is, for example, one that includes, in mol% based on oxides, at least one oxide selected from the group consisting of TiO₂, Ta₂O₅, WO₃, Nb₂O₅, ZrO₂, and Ln₂O₃ (Ln is at least one element selected from the group consisting of Y, La, Gd, Yb, and Lu), which are high-refractive index components, in an amount of 30% to 80%, and has a total content of SiO₂ and B₂O₃, which are glass framework components, of 20% to 70% and that, in a case where the glass includes one or more alkaline-earth metal components (MgO, CaO, SrO, and BaO), a proportion of BaO in the alkaline metal components is 0.5 or less.

The components of glass composition A which satisfies this requirement are explained below in detail. The optical glass of the present invention is not limited to the compositions of the following embodiments so long as the optical glass has the properties described above.

### <Glass Composition A>

SiO₂ is a glass-forming component and is a component which imparts high strength and crack resistance to the glass and improves the stability and chemical durability of the glass. The content of SiO₂ is preferably 5% or higher and 44% or less. In the case where the content of SiO₂ is 5% or higher, the temperature T₁ at which the glass viscosity is 10¹ dPa·s can be regulated to a value within the preferred range. The content of SiO₂ is preferably 7% or higher, more preferably 9% or higher, still more preferably 10% or higher, especially preferably 11% or higher. Meanwhile, in the case where the content of SiO₂ is 44% or less, components for obtaining a high refractive index can be contained in a larger amount. The content of SiO₂ is more preferably 38% or less, more preferably 30% or less, still more preferably 20% or less, still more preferably 15% or less, especially preferably 12% or less.

B₂O₃ is a component which lowers the Tg, improves mechanical properties, including strength and crack resistance, of the glass, and lowers the devitrification temperature. However, too high B₂O₃ contents are prone to result in a decrease in refractive index. Consequently, the content of B₂O₃ is preferably 0% or higher and 40% or less. The content of B₂O₃ is more preferably 35% or less, still more preferably 30% or less, still more preferably 25% or less, still more preferably 23% or less, especially preferably 22% or less. Meanwhile, the content of B₂O₃ is more preferably 5% or higher, still more preferably 12% or higher, still more preferably 18% or higher, especially preferably 20% or higher.

SiO₂ and B₂O₃ are glass-forming components and are components which improve the stability of the glass. In the case where the total content of SiO₂ and B₂O₃ is high, the glass has a lowered devitrification temperature and is easy to produce. Consequently, the total content of SiO₂ and B₂O₃ is 20% or higher. The total content thereof is preferably 25% or higher, more preferably 28% or higher, still more preferably 30% or higher, especially preferably 32% or higher. Meanwhile, by reducing the total content of SiO₂ and B₂O₃, an improvement in refractive index can be attained. Hence, in the case where an especially high refractive index is required, the total content thereof is preferably 70% or less, more preferably 50% or less, still more preferably 40% or less, still more preferably 35% or less, still more preferably 33% or less, especially preferably 32% or less.

In the case where B₂O₃ is contained, the glass is prone to be devitrified if the ratio of the content of SiO₂ to the content of B₂O₃, SiO₂/B₂O₃, is high. Consequently, in the case where B₂O₃ is contained, SiO₂/B₂O₃ is preferably 5.0 or less, more preferably 4.0 or less, still more preferably 3.0 or less, still more preferably 2.0 or less, still more preferably 1.0 or less, still more preferably 0.8 or less, especially preferably 0.6 or less.

TiO₂, Ta₂O₅, WO₃, Nb₂O₅, ZrO₂, and Ln₂O₃ (Ln is at least one element selected from the group consisting of Y, La, Gd, Yb, and Lu) are high-refractive index components which heighten the refractive index of the glass. The total content of these components is preferably 30% to 80%. In the case where an especially high refractive index is required, the content thereof is preferably 40% or higher, more preferably 55% or higher, still more preferably 60% or higher, yet still more preferably 65% or higher, especially preferably 67% or higher. Meanwhile, in the case where the total content of the high-refractive index components exceeds 80%, the glass is prone to be devitrified. For use in applications where lower surface roughness Ra is required, the content of these components is more preferably 70% or less, still more preferably 60% or less, still more preferably 50% or less, especially preferably 45% or less.

The total content of alkali metal components (Li₂O+Na₂O+K₂O) is 0% or higher and 10% or less. By increasing the content of these alkali metal components, the Tg can be lowered. However, in the case where Li₂O+Na₂O+K₂O is too high, the glass is prone to have too low a T₁ and a steep viscosity curve, resulting in reduced producibility. Meanwhile, in the case where Li₂O+Na₂O+K₂O is too low, the glass is prone to have too high a T₁ and requires higher temperatures for melting. As a result, the TiO₂ and Nb₂O₅ among the high-refractive index components are prone to be reduced and this may cause coloring. Consequently, in the case where one or more of Li₂O, Na₂O, and K₂O are contained, Li₂O+Na₂O+K₂O is preferably 0.5% or higher and 10% or less. Li₂O+Na₂O+K₂O is more preferably 1% or higher, still more preferably 2% or higher, still more preferably 4% or higher, especially preferably 5% or higher. Meanwhile, Li₂O+Na₂O+K₂O is preferably 6% or less, more preferably 3% or less, still more preferably 2% or less, especially preferably 1% or less. The expression "Li₂O+Na₂O+K₂O" indicates the total content of at least one alkali metal oxide component selected from the group consisting of Li₂O, Na₂O, and K₂O. Hereinafter, each set of components connected by "+" likewise indicates the total content of at least one component selected from the group consisting of the components connected by "+".

The content of Li₂O is 0% to 10%. In the case where Li₂O is contained, the content thereof is 0.2% or higher and 10% or less. The inclusion of Li₂O can improve the strength (Kc) and crack resistance (CIL). In the case where the optical glass of the present invention contains Li₂O, the content thereof is preferably 1% or higher, more preferably 2% or higher, still more preferably 4% or higher, especially preferably 5% or higher. Meanwhile, too high Li₂O contents are prone to result in devitrification. Especially in the case where quality regarding devitrification is required, the content of Li₂O is preferably 8% or less, more preferably 6% or less, still more preferably 4% or less, still more preferably 2% or less, especially preferably 1% or less.

In the case where the optical glass according to this embodiment is to be chemically strengthened, the content of Li₂O is preferably 3.0% or higher, more preferably 6.0% or higher, still more preferably 9.0% or higher, especially preferably 11.0% or higher.

Na₂O is a component which inhibits devitrification and lowers the Tg, and the content thereof is 0% or higher and 10% or less. The inclusion of Na₂O produces an excellent devitrification-inhibiting effect. In the case where the optical glass of the present invention contains Na₂O, the content thereof is preferably 1% or higher, more preferably 2% or higher, still more preferably 3% or higher, especially preferably 4% or higher. Meanwhile, too high Na₂O contents are prone to reduce the strength and crack resistance. The content of Na₂O, in the case where strength is especially required, is preferably 7% or less, more preferably 4% or less, still more preferably 2% or less, especially preferably 1% or less.

Tg tends to be lower as the total content of Li₂O and Na₂O increases. Consequently, the total content of Li₂O and Na₂O is preferably 0% or higher and 10% or less. The total content thereof is more preferably 6% or less, still more preferably 4% or less, still more preferably 2% or less, especially preferably 1% or less.

K₂O is a component which inhibits devitrification and lowers the Tg, and the content of K₂O is 0% or higher and 10% or less. The inclusion of K₂O produces an excellent devitrification-inhibiting effect. In the case where the optical glass of the present invention contains K₂O, the content of K₂O is preferably 1% or higher, more preferably 2% or higher, still more preferably 3% or higher, especially preferably 4% or higher. Meanwhile, too high K₂O contents are prone to reduce the strength and crack resistance. The content of K₂O, in the case where strength is especially required, is preferably 7% or less, more preferably 4% or less, still more preferably 2% or less, especially preferably 1% or less.

MgO is a component which improves glass meltability, inhibits devitrification, and is useful in regulating optical constants of the glass, e.g., Abbe number and refractive index. Meanwhile, too high MgO contents rather promote devitrification. Consequently, the content of MgO is preferably 0% or higher and 10% or less. The content of MgO is more preferably 8% or less, especially preferably 6% or less. Meanwhile, the content of MgO is preferably 0.3% or higher, more preferably 0.5% or higher, still more preferably 1% or higher.

CaO is a component which inhibits devitrification, but too high CaO contents are prone to reduce the crack resistance. Consequently, the content of CaO is preferably 0% or higher and 25% or less. The content of CaO is more preferably 20% or less, still more preferably 10% or less, especially preferably 6% or less. Meanwhile, the content of CaO is more preferably 0.3% or higher, still more preferably 0.5% or higher, especially preferably 1% or higher.

SrO is a component which improves glass meltability, inhibits devitrification, and is useful in regulating optical constants of the glass. Meanwhile, too high SrO contents rather promote devitrification. Consequently, the content of SrO is preferably 0% or higher and 20% or less. The content of SrO is more preferably 15% or less, still more preferably 8% or less, especially preferably 4% or less. Meanwhile, the content of SrO is more preferably 0.3% or higher, still more preferably 0.5% or higher, especially preferably 1% or higher.

In the case where the total content of MgO, CaO, and SrO is too high, the glass is prone to be devitrified. Consequently, the total content of MgO, CaO, and SrO is preferably 30% or less. The total content thereof is more preferably 20% or less, still more preferably 12% or less, still more preferably 10% or less, still more preferably 5% or less, especially preferably 2% or less.

BaO is a component which inhibits devitrification, but too high BaO contents are prone to result in an increase in density. Consequently, in the case where BaO is contained, the content thereof is preferably 0% or higher and 30% or less. The content of BaO is more preferably 25% or less, still more preferably 15% or less, still more preferably 8% or less, especially preferably 4% or less. Meanwhile, the content of BaO is more preferably 0.3% or higher, still more preferably 0.5% or higher, especially preferably 1% or higher.

In the case where the glass contains alkaline-earth metal components (MgO+CaO+SrO+BaO), a reduction in specific gravity can be attained by regulating the ratio of the content of BaO to the total content of the alkaline-earth metal components (BaO/(MgO+CaO+SrO+BaO)) to 0.5 or less. The ratio is preferably 0.4 or less, more preferably 0.3 or less, still more preferably 0.2 or less, especially preferably 0.1 or less. By heightening the proportion of BaO to the alkaline metal components, the devitrification temperature can be lowered. For use in applications where lower surface roughnesses Ra are required, that ratio is preferably 0.1 or larger, more preferably 0.2 or larger, still more preferably 0.3 or larger, especially preferably 0.4 or larger.

In the case where the total content of the alkali metal components (Li₂O+Na₂O+K₂O) and the alkaline-earth metal components (MgO+CaO+SrO+BaO) is too high, the glass is prone to have a lowered Tg. Consequently, the total content of the alkali metal components and the alkaline-earth metal components is preferably 30% or less. The total content thereof is more preferably 16% or less, still more preferably 12% or less, still more preferably 10% or less, still more preferably 5% or less, especially preferably 2% or less.

Al₂O₃ is a component which improves the chemical durability, but too high Al₂O₃ contents render the glass prone to be devitrified. Consequently, the content of Al₂O₃ is preferably 0% or higher and 5% or less. The content of Al₂O₃ is more preferably 3% or less, especially preferably 2% or less. Meanwhile, the content of Al₂O₃ is more preferably 0.3% or higher, still more preferably 0.5% or higher, especially preferably 1% or higher.

TiO₂ is a component which heightens the refractive index of the glass to enhance dispersion by the glass, and the content thereof is 0% or higher and 50% or less. In the case where TiO₂ is contained, the content thereof is preferably 10% or higher, more preferably 20% or higher, still more preferably 25% or higher, still more preferably 28% or higher, still more preferably 30% or higher, especially preferably 32% or higher. Meanwhile, too high TiO₂ contents are prone to cause coloring and result in a decrease in transmittance. Consequently, especially in the case where transmittance is required, the content of TiO₂ is preferably 50% or less, more preferably 40% or less, still more preferably 37% or less, still more preferably 35% or less, still more preferably 34% or less, still more preferably 33% or less, especially preferably 32% or less.

In the case where B₂O₃ is contained, the glass requires higher temperatures for melting if the ratio of the content of TiO₂ to the content of B₂O₃, TiO₂/B₂O₃, is high. In such cases, the titanium is prone to be reduced and the glass is prone to take a color and have a reduced transmittance. Consequently, in the case where B₂O₃ is contained, TiO₂/B₂O₃ is preferably 5.0 or less, more preferably 4.0 or less, still more preferably 3.0 or less, still more preferably 2.0 or less, still more preferably 1.8 or less, still more preferably 1.7 or less, still more preferably 1.6 or less, especially preferably 1.5 or less.

WO₃, when added, inhibits the glass from being devitrified. However, too large addition amounts of WO₃ rather render the glass prone to be devitrified. Consequently, the content of WO₃ is preferably 0% to 10%. The content of WO₃ is more preferably 6% or less, still more preferably 2% or less, still more preferably 1.5% or less, still more preferably 1.0% or less, especially preferably 0.5% or less. The addition of WO₃ can improve the refractive index of the glass. Consequently, in the case where an especially high refractive index is required, the content of WO₃ is more preferably 0.3% or higher, still more preferably 0.5% or higher, especially preferably 1% or higher.

Nb₂O₅ is a component which heightens the refractive index of the glass and reduces the Abbe number (v_{d}) thereof. The content of Nb₂O₅ is 0% or higher and 35% or less. The content of Nb₂O₅ is more preferably 1% or higher, still more preferably 2% or higher, still more preferably 2.5% or higher, still more preferably 3% or higher, still more preferably 4% or higher, still more preferably 5% or higher, especially preferably 6% or higher.

Meanwhile, too high Nb₂O₅ contents render the glass prone to be devitrified. Consequently, for use in applications where lower surface roughnesses Ra are required, the content of Nb₂O₅ is preferably 20% or less, more preferably 15% or less, still more preferably 10% or less, still more preferably 6% or less, still more preferably 4% or less, still more preferably 3% or less, still more preferably 2% or less, especially preferably 1% or less.

In the case where the total content of TiO₂, WO₃, and Nb₂O₅ is too low, the glass has a reduced refractive index. Consequently, the total content of TiO₂, WO₃, and Nb₂O₅ is preferably 10% or higher and 50% or less. The total content thereof is more preferably 15% or higher, still more preferably 20% or higher, still more preferably 25% or higher, especially preferably 30% or higher.

Y₂O₃ is a component which heightens the refractive index of the glass and with which the T₁ of the glass can be regulated to a value within the preferred range. The content of Y₂O₃ is 0% or higher and 7% or less. The content of Y₂O₃ is preferably 1% or higher, more preferably 2% or higher, still more preferably 2.5% or higher, still more preferably 3% or higher, still more preferably 3.5% or higher, still more preferably 4% or higher, especially preferably 5% or higher. Meanwhile, too high Y₂O₃ contents render the glass prone to be devitrified. Consequently, for use in applications where a lower surface roughness Ra is required, the content of Y₂O₃ is preferably 5% or less, more preferably 4% or less, still more preferably 3.5% or less, especially preferably 3% or less.

ZrO₂ is a component which heightens the refractive index of the glass and enhances the chemical durability of the glass, and the content thereof is 0% or higher and 20% or less. The inclusion of ZrO₂ can improve the crack resistance. In the case where ZrO₂ is contained, the content thereof is preferably 1% or higher, more preferably 3% or higher, still more preferably 5% or higher, still more preferably 6% or higher, especially preferably 6.5% or higher. Meanwhile, too high ZrO₂ contents render the glass prone to be devitrified. Consequently, for use in applications where a lower surface roughness Ra is required, the content of ZrO₂ is more preferably 15% or less, still more preferably 10% or less, still more preferably 8% or less, especially preferably 7% or less.

ZnO is a component which improves mechanical properties, including strength and crack resistance, of the glass, and the content thereof is 0% or higher and 15% or less. In the case where ZnO is contained, the content of ZnO is more preferably 0.3% or higher, still more preferably 0.5% or higher, especially preferably 1% or higher. Meanwhile, too high ZnO contents render the glass prone to be devitrified. Consequently, for use in applications where a lower surface roughness Ra is required, the content of ZnO is more preferably 10% or less, still more preferably 5% or less, still more preferably 2% or less, still more preferably 1% or less, especially preferably 0.5% or less.

La₂O₃ is a component which improves the refractive index of the glass, and the content thereof is 0% or higher and 35% or less. In the case where La₂O₃ is contained, the content of La₂O₃ is preferably 10% or higher, more preferably 15% or higher, still more preferably 16% or higher, still more preferably 18% or higher, especially preferably 20% or higher. Meanwhile, too high La₂O₃ contents result in a decrease in mechanical property and an increase in devitrification temperature. Consequently, in the case where mechanical properties and producibility are important, the content of La₂O₃ is preferably 30% or less, more preferably 25% or less, still more preferably 22% or less, still more preferably 20% or less, still more preferably 19% or less, still more preferably 18% or less, especially preferably 17% or less.

Gd₂O₃ is a component which improves the refractive index of the glass, and the content thereof is 0% or higher and 15% or less. In the case where Gd₂O₃ is contained, the content of Gd₂O₃ is preferably 1% or higher, more preferably 2% or higher, still more preferably 3% or higher, still more preferably 4% or higher, especially preferably 5% or higher. Meanwhile, too high Gd₂O₃ contents result in a decrease in mechanical property and an increase in devitrification temperature. Consequently, in the case where mechanical properties and producibility are important, the content of Gd₂O₃ is preferably 10% or less, more preferably 7% or less, still more preferably 5% or less, still more preferably 4% or less, still more preferably 3% or less, still more preferably 2% or less, especially preferably 1% or less.

In the case where the ratio of the total content of ZrO₂, Ta₂O₅, and Nb₂O₅ to the total content of SiO₂ and B₂O₃ [(ZrO₂+Ta₂O₅+Nb₂O₅)/(SiO₂+B₂O₃)] is too large, the glass is prone to have reduced devitrification viscosity. Consequently, (ZrO₂+Ta₂O₅+Nb₂O₅)/(SiO₂+B₂O₃) is preferably 1.0 or less, more preferably 0.8 or less, still more preferably 0.6 or less, still more preferably 0.4 or less, especially preferably 0.35 or less.

In the case where the ratio of the total content of Nb₂O₅, TiO₂, WO₃, and Ta₂O₅ to the total content of La₂O₃, Gd₂O₃, Y₂O₃, and Yb₂O₃ [(Nb₂O₅+TiO₂+WO₃+Ta₂O₅)/(La₂O₃+Gd₂O₃+Y₂O₃+Yb₂O₃)] is too large, the glass is prone to have a color and a reduced transmittance. Consequently, (Nb₂O₅+TiO₂+WO₃+Ta₂O₅)/(La₂O₃+Gd₂O₃+Y₂O₃+Yb₂O₃) is preferably 10.0 or less, more preferably 8.0 or less, still more preferably 6.0 or less, still more preferably 5.0 or less, still more preferably 4.5 or less, still more preferably 4.0 or less, still more preferably 3.0 or less, still more preferably 2.5 or less, still more preferably 2.0 or less, still more preferably 1.5 or less, especially preferably 1.3 or less. Meanwhile, in the case where (Nb₂O₅+TiO₂+WO₃+Ta₂O₅)/(La₂O₃+Gd₂O₃+Y₂O₃+Yb₂O₃) is too small, the glass is prone to have a lowered Tg. Consequently, for use in applications where high heat resistance is required, (Nb₂O₅+TiO₂+WO₃+Ta₂O₅)/(La₂O₃+Gd₂O₃+Y₂O₃+Yb₂O₃) is preferably 0.5 or larger, more preferably 0.7 or larger, still more preferably 0.9 or larger, still more preferably 1.1 or larger, still more preferably 1.2 or larger, still more preferably 1.3 or larger, still more preferably 1.4 or larger, still more preferably 2.0 or larger, still more preferably 3.0 or larger, especially preferably 3.5 or larger.

As₂O₃ is a harmful chemical substance, and use thereof hence tends to be avoided in recent years and requires any measure for environmental preservation. It is hence preferable, in the case where influence on the environment is important, that the glass contains substantially no As₂O₃ except for unavoidable inclusion.

It is preferable that the optical glass according to this embodiment contains at least one of Sb₂O₃ and SnO₂. Although being not essential components, these can be added for the purposes of regulating refractive index characteristics, improving meltability, coloring inhibition, improving transmittance, refining, improving chemical durability, etc. In the case where the optical glass contains one or both of those components, the total content thereof is preferably 10% or less, more preferably 5% or less, still more preferably 3% or less, especially preferably 1% or less.

It is preferable that the optical glass according to this embodiment contains V₂O₅. Although not essential, V₂O₅ can be added for the purposes of improving transmittance, improving refining properties, etc. In the case where V₂O₅ is contained, the content thereof is preferably 5% or less, more preferably 3% or less, still more preferably 1% or less, especially preferably 0.5% or less.

It is preferable that the optical glass according to this embodiment contains F. Although not essential, F can be added for the purposes of improving meltability, improving transmittance, improving refining properties, etc. In the case where F is contained, the content of F is preferably 5% or less, more preferably 3% or less.

In producing the optical glass according to this embodiment, it is preferable that a melting step for heating and melting raw materials for glass in a melting vessel to obtain a molten glass is conducted so that an operation for heightening the water content in the molten glass is performed during the melting step. The operation for heightening the water content in the glass is not limited, and may be, for example, a treatment in which water vapor is added to the atmosphere for melting or a treatment in which a gas including water vapor is bubbled into the melt. Although the operation for heightening the water content is not essential, this operation can be performed for the purposes of improving transmittance, improving refining properties, etc.

In the case where the optical glass according to this embodiment contains an alkali metal oxide such as Li₂O or Na₂O, the glass can be chemically strengthened by replacing Li ions with Na or K ions or replacing Na ions with K ions. That is, the strength of this optical glass can be improved by conducting a chemical strengthening treatment.

### <Glass Composition A1>

A glass composition that is the glass composition A described above in which the content of alkaline-earth metal components is 5% or less is referred to as glass composition A1, and components of the glass composition are explained below. Explanations of some of the components of the glass composition A1 are omitted here because these are the same as those of the corresponding components of the glass composition A.

SiO₂ is a glass-forming component and is a component which imparts high strength and crack resistance to the glass and improves the stability and chemical durability of the glass. The content of SiO₂ is preferably 5% or higher and 30% or less. In the case where the content of SiO₂ is 5% or higher, the temperature T₁ at which the glass viscosity is 10¹ dPa·s can be regulated to a value within the preferred range. The content of SiO₂ is preferably 7% or higher, more preferably 9% or higher, still more preferably 10% or higher, especially preferably 11% or higher. Meanwhile, in the case where the content of SiO₂ is 30% or less, components for obtaining a high refractive index can be contained in a larger amount. The content of SiO₂ is more preferably 25% or less, more preferably 20% or less, still more preferably 15% or less, still more preferably 13% or less, especially preferably 12% or less.

B₂O₃ is a component which lowers the Tg, improves mechanical properties such as strength and crack resistance, of the glass, and lowers the devitrification temperature. However, too high B₂O₃ contents are prone to result in a decrease in refractive index. Consequently, the content of B₂O₃ is preferably 5% or higher and 40% or less. The content of B₂O₃ is more preferably 35% or less, still more preferably 30% or less, still more preferably 25% or less, still more preferably 23% or less, especially preferably 22% or less. Meanwhile, the content of B₂O₃ is more preferably 10% or higher, still more preferably 15% or higher, still more preferably 18% or higher, especially preferably 20% or higher.

SiO₂ and B₂O₃ are glass-forming components and are components which improve the stability of the glass, and the total content of SiO₂ and B₂O₃ is 20% or higher and 45% or less. In the case where the total content of SiO₂ and B₂O₃ is high, the glass has a lowered devitrification temperature and is easy to produce. Consequently, the total content of SiO₂ and B₂O₃ is 20% or higher. The total content thereof is preferably 25% or higher, more preferably 28% or higher, still more preferably 30% or higher, especially preferably 32% or higher. Meanwhile, by reducing the total content of SiO₂ and B₂O₃, an improvement in refractive index can be attained. Hence, in the case where an especially high refractive index is required, the total content thereof is preferably 45% or less, more preferably 40% or less, still more preferably 35% or less, still more preferably 33% or less, especially preferably 32% or less.

In the case where the ratio of the content of SiO₂ to the content of B₂O₃, SiO₂/B₂O₃, is too high, the glass is prone to be devitrified. Consequently, SiO₂/B₂O₃ is preferably 1.4 or less, more preferably 1.2 or less, still more preferably 1.0 or less, still more preferably 0.8 or less, especially preferably 0.6 or less.

TiO₂, Ta₂O₅, WO₃, Nb₂O₅, ZrO₂, and Ln₂O₃ (Ln is at least one element selected from the group consisting of Y, La, Gd, Yb, and Lu) are high-refractive index components which heighten the refractive index of the glass. The total content of these components is preferably 45% or higher and 80% or less. In the case where an especially high refractive index is required, the total content of these components is preferably 50% or higher, more preferably 55% or higher, still more preferably 60% or higher, yet still more preferably 65% or higher, especially preferably 67% or higher. Meanwhile, in the case where the total content of the high-refractive index components exceeds 80%, the glass is prone to be devitrified. For use in applications where lower surface roughnesses Ra are required, the content of these components is more preferably 75% or less, still more preferably 70% or less, especially preferably 68% or less.

MgO is a component which improves glass meltability, inhibits devitrification, and is useful in regulating optical constants of the glass, e.g., Abbe number and refractive index. Meanwhile, too high MgO contents rather promote devitrification. Consequently, the content of MgO is preferably 0% or higher and 5% or less. The content of MgO is more preferably 4% or less, especially preferably 2% or less. Meanwhile, the content of MgO is preferably 0.3% or higher, more preferably 0.5% or higher, still more preferably 1% or higher.

CaO is a component which inhibits devitrification, but too high CaO contents are prone to reduce the crack resistance. Consequently, the content of CaO is preferably 0% or higher and 5% or less. The content of CaO is more preferably 4% or less, still more preferably 2% or less, especially preferably 1% or less. Meanwhile, the content of CaO is more preferably 0.3% or higher, still more preferably 0.5% or higher, especially preferably 1% or higher.

SrO is a component which improves glass meltability, inhibits devitrification, and is useful in regulating optical constants of the glass. Meanwhile, too high SrO contents promote, rather than inhibit, devitrification. Consequently, the content of SrO is preferably 0% or higher and 5% or less. The content of SrO is more preferably 15% or less, still more preferably 4% or less, especially preferably 2% or less. Meanwhile, the content of SrO is preferably 0.3% or higher, more preferably 0.5% or higher, still more preferably 1% or higher.

In the case where the total content of MgO, CaO, and SrO is too high, the glass is prone to be devitrified. Consequently, the total content of MgO, CaO, and SrO is preferably 5% or less. The total content thereof MgO, CaO, and SrO is more preferably 4% or less, still more preferably 3% or less, still more preferably 2% or less, still more preferably 1% or less, especially preferably 0.5% or less.

BaO is a component which inhibits devitrification, but too high BaO contents are prone to result in an increase in density. Consequently, in the case where BaO is contained, the content of BaO is preferably 0% or higher and 5% or less. The content of BaO is more preferably 4% or less, still more preferably 3% or less, still more preferably 2% or less, especially preferably 1% or less. Meanwhile, the content of BaO is more preferably 0.3% or higher, still more preferably 0.5% or higher, especially preferably 1% or higher.

In the case where the glass contains alkaline-earth metal components (MgO+CaO+SrO+BaO), a reduction in specific gravity can be attained by regulating the ratio of the content of BaO to the total content of the alkaline-earth metal components (BaO/(MgO+CaO+SrO+BaO)) to 0.5 or less. The ratio (BaO/(MgO+CaO+SrO+BaO)) is preferably 0.4 or less, more preferably 0.3 or less, still more preferably 0.2 or less, especially preferably 0.1 or less. By heightening the proportion of BaO to the alkaline metal components, the devitrification temperature can be lowered. For use in applications where a lower surface roughness Ra is required, the ratio is preferably 0.1 or larger, more preferably 0.2 or larger, still more preferably 0.3 or larger, especially preferably 0.4 or larger.

In the case where the total content of the alkali metal components (Li₂O+Na₂O+K₂O) and the alkaline-earth metal components (MgO+CaO+SrO+BaO) is too high, the glass is prone to have low Tg. Consequently, the total content of the alkali metal components and the alkaline-earth metal components is preferably 15% or less. The total content of the alkali metal components and the alkaline-earth metal components is more preferably 12% or less, still more preferably 10% or less, still more preferably 5% or less, still more preferably 3% or less, especially preferably 2% or less.

In the case where the ratio of the content of TiO₂ to the content of B₂O₃, TiO₂/B₂O₃, is too high, the glass requires higher temperature for melting. In such cases, the titanium is prone to be reduced and the glass is prone to take a color and have a reduced transmittance. Consequently, TiO₂/B₂O₃ is preferably 2.0 or less, more preferably 1.8 or less, still more preferably 1.7 or less, still more preferably 1.6 or less, especially preferably 1.5 or less.

The glass composition A1 gives an optical glass having a high refractive index (n_{d}) in the range of 1.92 to 2.15. The refractive index (n_{d}) is 1.92 or higher. The optical glass is suitable for use as an optical glass for wearable appliances from the standpoints of an increase in image display angle, increases in luminance and contrast, an improvement in lightguide property, processability for producing diffraction gratings, etc. The optical glass is suitable also as a small-sized imaging glass lens with a wide imaging angle of view for use in applications such as in-vehicle cameras and visual sensors for robots, the lens being smaller and capable of wide-range imaging. The refractive index (n_{d}) thereof is preferably 1.95 or higher, more preferably 1.97 or higher, still more preferably 1.98 or higher, still more preferably 1.99 or higher, still more preferably 2.00 or higher.

Meanwhile, in the case where the refractive index (n_{d}) exceeds 2.15, the glass tends to have a high density and a high devitrification temperature. Especially in the case where it is important for the optical glass to have a low density, the refractive index (n_{d}) thereof is preferably 2.10 or less, more preferably 2.06 or less, still more preferably 2.03 or less, still more preferably 2.01 or less, still more preferably 1.98 or less, still more preferably 1.95 or less, still more preferably 1.94 or less, yet still more preferably 1.93 or less.

The glass composition A1 gives an optical glass having a density (d) of 4.0 g/cm³ to 6.0 g/cm³. Since the optical glass has a density within that range, a wear feeling of a user can be made comfortable when used in wearable appliances, and the overall apparatus weight can be reduced when used in in-vehicle cameras, visual sensors for robots, etc. The density (d) thereof is preferably 5.8 g/cm³ or less, more preferably 5.6 g/cm³ or less, still more preferably 5.4 g/cm³ or less, still more preferably 5.2 g/cm³ or less, still more preferably 5.1 g/cm³ or less, still more preferably 5.0 g/cm³ or less.

Meanwhile, from the standpoint of making the surfaces of the optical glass less apt to receive scratches, the density (d) thereof is preferably 4.0 g/cm³ or higher, more preferably 4.3 g/cm³ or higher, still more preferably 4.6 g/cm³ or higher, still more preferably 4.7 g/cm³ or higher, especially preferably 4.8 g/cm³ or higher.

### <Glass Composition A2>

A glass composition that is the glass composition A described above in which the content of alkaline-earth metal components is higher than 5% but not higher than 50% and the B₂O₃ content is less than 15% is referred to as glass composition A2, and components of the glass composition are explained below. Explanations of some of the components of the glass composition A2 are omitted here because these are the same as those of the corresponding components of the glass composition A.

SiO₂ is a glass-forming component and is a component which imparts high strength and crack resistance to the glass and improves the stability and chemical durability of the glass. The content of SiO₂ is preferably 5% or higher and 44% or less. In the case where the content of SiO₂ is 5% or higher, the temperature T₁ at which the glass viscosity is 10¹ dPa·s can be regulated to a value within the preferred range. The content of SiO₂ is preferably 10% or higher, more preferably 15% or higher, still more preferably 20% or higher, still more preferably 24% or higher, still more preferably 28% or higher, especially preferably 30% or higher. Meanwhile, in the case where the content of SiO₂ is 44% or less, components for obtaining a high refractive index can be contained. The content of SiO₂ is more preferably 37% or less, more preferably 35.5% or less, still more preferably 34% or less, still more preferably 33% or less, especially preferably 31% or less.

B₂O₃ is a glass-forming component and is optional. B₂O₃ is a component which lowers the Tg, improves mechanical properties, including strength and crack resistance, of the glass, and lowers the devitrification temperature. From the standpoint of a balance between refractive index and mechanical strength, the content of B₂O₃ is preferably 0% or higher but less than 15%. The content of B₂O₃ is more preferably 14% or less, still more preferably 13% or less, still more preferably 12% or less, still more preferably 11% or less, especially preferably 10% or less. Meanwhile, the content of B₂O₃ is more preferably 1% or higher, still more preferably 3% or higher, still more preferably 5% or higher, especially preferably 7% or higher.

SiO₂ and B₂O₃ are glass-forming components and are components which improve the stability of the glass, and the total content of SiO₂ and B₂O₃ is 30% or higher and 70% or less. In the case where the total content of SiO₂ and B₂O₃ is high, the glass has a lowered devitrification temperature and is easy to produce. Consequently, the total content of SiO₂ and B₂O₃ is 30% or higher. The total content of SiO₂ and B₂O₃ is preferably 32% or higher, more preferably 34% or higher, still more preferably 36% or higher, especially preferably 37% or higher. Meanwhile, by reducing the total content of SiO₂ and B₂O₃, an improvement in refractive index can be attained. Hence, in the case where an especially high refractive index is required, the total content of SiO₂ and B₂O₃ is preferably 70% or less, more preferably 60% or less, still more preferably 50% or less, still more preferably 40% or less, especially preferably 35% or less.

In the case where B₂O₃ is contained, the glass is prone to be devitrified if the ratio of the content of SiO₂ to the content of B₂O₃, SiO₂/B₂O₃, is high. Consequently, in the case where B₂O₃ is contained, SiO₂/B₂O₃ is preferably 5.0 or less, more preferably 4.5 or less, still more preferably 4.0 or less, still more preferably 3.5 or less, especially preferably 3.0 or less.

TiO₂, Ta₂O₅, WO₃, Nb₂O₅, ZrO₂, and Ln₂O₃ (Ln is at least one element selected from the group consisting of Y, La, Gd, Yb, and Lu) are high-refractive index components which heighten the refractive index of the glass. The total content of these components is preferably 30% to 55%. In the case where an especially high refractive index is required, the total content of these components is preferably 33% or higher, more preferably 35% or higher, still more preferably 36% or higher, yet still more preferably 37% or higher, especially preferably 38% or higher. Meanwhile, in the case where the total content of these high-refractive index components is too high, the glass is prone to be devitrified. For use in applications where a lower surface roughness Ra is required, the content of these components is more preferably 50% or less, still more preferably 45% or less, still more preferably 40% or less, especially preferably 35% or less.

The total content of alkali metal components (Li₂O+Na₂O+K₂O) is 0% or higher and 10% or less. By increasing the content of these alkali metal components, the Tg can be lowered. However, in the case where Li₂O+Na₂O+K₂O is too high, T₁ is prone to be low and a viscosity curve is steep, resulting in reduced producibility. Meanwhile, in the case where Li₂O+Na₂O+K₂O is too low, T₁ is prone to be high and high temperature is required for melting, and this may cause coloring. Consequently, in the case where one or more of Li₂O, Na₂O, and K₂O are contained, Li₂O+Na₂O+K₂O is preferably 0.5% or higher and 10% or less. Li₂O+Na₂O+K₂O is more preferably 1% or higher, still more preferably 1.5% or higher, still more preferably 2% or higher, especially preferably 3% or higher. Meanwhile, Li₂O+Na₂O+K₂O is preferably 6% or less, more preferably 4% or less, still more preferably 3% or less, especially preferably 2% or less.

The content of Li₂O is 0% or higher and 10% or less. In the case where Li₂O is contained, the content thereof is 0.2% or higher and 10% or less. The inclusion of Li₂O can improve the strength (Kc) and crack resistance (CIL). In the case where the optical glass of the present invention contains Li₂O, the content of Li₂O is preferably 0.5% or higher, more preferably 1% or higher, still more preferably 1.5% or higher, especially preferably 2% or higher. Meanwhile, too high Li₂O contents are prone to result in devitrification. Especially in the case where devitrification is problematic, the content of Li₂O is preferably 8% or less, more preferably 6% or less, still more preferably 4% or less, especially preferably 2% or less.

In the case where the optical glass according to this embodiment is to be chemically strengthened, the content of Li₂O is preferably 3.0% or higher, more preferably 6.0% or higher, still more preferably 9.0% or higher, especially preferably 11.0% or higher.

CaO is a component which inhibits devitrification, but too high CaO contents are prone to reduce the crack resistance. Consequently, the content of CaO is preferably 0% or higher and 25% or less. The content of CaO is more preferably 20% or less, still more preferably 15% or less, still more preferably 10% or less, still more preferably 8% or less, still more preferably 7% or less, especially preferably 6.5% or less. Meanwhile, the content of CaO is more preferably 2% or higher, still more preferably 4% or higher, still more preferably 5% or higher, especially preferably 6% or higher.

SrO is a component which improves glass meltability, inhibits devitrification, and is useful in regulating optical constants of the glass. Meanwhile, too high SrO contents rather promote devitrification. Consequently, the content of SrO is preferably 0% or higher and 20% or less. The content of SrO is more preferably 15% or less, still more preferably 10% or less, still more preferably 9% or less, still more preferably 8% or less, especially preferably 7% or less. Meanwhile, the content of SrO is more preferably 2% or higher, still more preferably 4% or higher, especially preferably 6% or higher.

In the case where the total content of MgO, CaO, and SrO is too high, the glass is prone to be devitrified. Consequently, the total content of MgO, CaO, and SrO is preferably 30% or less. The total content thereof is more preferably 25% or less, still more preferably 18% or less, still more preferably 16% or less, still more preferably 15% or less, especially preferably 14% or less.

BaO is a component which inhibits devitrification, but too high BaO contents are prone to result in an increase in density. Consequently, in the case where BaO is contained, the content of BaO is preferably 0% or higher and 30% or less. The content of BaO is more preferably 20% or less, still more preferably 15% or less, still more preferably 11% or less, still more preferably 9% or less, especially preferably 8% or less. Meanwhile, the content of BaO is more preferably 2% or higher, still more preferably 4% or higher, especially preferably 6% or higher.

The total content of alkaline-earth metal components (MgO+CaO+SrO+BaO) is 5% or higher and 50% or less. The total content of these components is preferably 50% or less such that the glass can be inhibited from being devitrified. The total content of these components is more preferably 40% or less, still more preferably 30% or less, still more preferably 27% or less, still more preferably 25% or less, still more preferably 23% or less, still more preferably 21% or less, especially preferably 20% or less. Since the total content of these components is 5% or higher, the glass can have improved meltability; such total contents are hence preferred. The total content thereof is more preferably 10% or higher, still more preferably 13% or higher, still more preferably 16% or higher, still more preferably 18% or higher, especially preferably 19% or higher.

By regulating the ratio of the content of BaO to the total content of the alkaline-earth metal components (MgO+CaO+SrO+BaO), BaO/(MgO+CaO+SrO+BaO), to 0.5 or less, the specific gravity can be reduced. The ratio is preferably 0.45 or less, more preferably 0.42 or less, still more preferably 0.40 or less, especially preferably 0.35 or less. By heightening the proportion of BaO to the alkaline-earth metal components, the devitrification temperature can be lowered and the producibility can be improved. In the case where producibility is especially important, that ratio is preferably 0.1 or larger, more preferably 0.2 or larger, still more preferably 0.3 or larger, especially preferably 0.35 or larger.

In the case where the total content of the alkali metal components (Li₂O+Na₂O+K₂O) and the alkaline-earth metal components (MgO+CaO+SrO+BaO) is too high, Tg of the glass is prone to be low. Consequently, the total content of the alkali metal components and the alkaline-earth metal components is preferably 30% or less. The total content of these components is more preferably 16% or less, still more preferably 14% or less, still more preferably 13% or less, still more preferably 12% or less, especially preferably 11.5% or less.

TiO₂ is a component which heightens the refractive index of the glass to enhance dispersion by the glass, and the content of TiO₂ is 0% or higher and 50% or less. In the case where TiO₂ is contained, the content of TiO₂ is preferably 10% or higher, more preferably 15% or higher, still more preferably 17% or higher, still more preferably 19% or higher, still more preferably 20% or higher, especially preferably 22% or higher. Meanwhile, too high TiO₂ contents are prone to cause coloring and result in a decrease in transmittance. Consequently, especially in the case where transmittance is required, the content of TiO₂ is preferably 50% or less, more preferably 40% or less, still more preferably 30% or less, still more preferably 25% or less, still more preferably 23% or less, still more preferably 22% or less, especially preferably 21% or less.

In the case where B₂O₃ is contained, the glass requires higher temperatures for melting if the ratio of the content of TiO₂ to the content of B₂O₃, TiO₂/B₂O₃, is high. In such cases, the titanium is prone to be reduced and the glass is prone to take a color and have a reduced transmittance. Consequently, in the case where B₂O₃ is contained, TiO₂/B₂O₃ is preferably 5.0 or less, more preferably 4.5 or less, still more preferably 4.0 or less, still more preferably 3.5 or less, still more preferably 3.0 or less, still more preferably 2.8 or less, especially preferably 2.7 or less.

Nb₂O₅ is a component which heightens the refractive index of the glass and reduces the Abbe number (v_{d}) thereof. The content of Nb₂O₅ is 0% or higher and 35% or less. The content of Nb₂O₅ is preferably 2% or higher, more preferably 4% or higher, still more preferably 5% or higher, still more preferably 6% or higher, still more preferably 7% or higher, still more preferably 8% or higher, especially preferably 10% or higher.

Meanwhile, too high Nb₂O₅ contents render the glass prone to be devitrified. Consequently, for use in applications where a lower surface roughness Ra is required, the content of Nb₂O₅ is preferably 20% or less, more preferably 10% or less, still more preferably 8% or less, especially preferably 7% or less.

In the case where the total content of Ti02, WO₃, and Nb₂O₅ is too low, the glass has a reduced refractive index. Consequently, the total content of TiO₂, WO₃, and Nb₂O₅ is preferably 10% or higher and 50% or less. The total content of TiO₂, WO₃, and Nb₂O₅ is more preferably 14% or higher, still more preferably 18% or higher, still more preferably 22% or higher, especially preferably 26% or higher. Meanwhile, in the case where the total content of TiO₂, WO₃, and Nb₂O₅ is too high, the glass is prone to be devitrified. Consequently, for use in applications where a lower surface roughness Ra is required, the total content of TiO₂, WO₃, and Nb₂O₅ is preferably 40% or less, more preferably 35% or less, still more preferably 30% or less, especially preferably 28% or less.

ZrO₂ is a component which heightens the refractive index of the glass and enhances the chemical durability of the glass, and the content of ZrO₂ is 0% or higher and 20% or less. The inclusion of ZrO₂ can improve the crack resistance. In the case where ZrO₂ is contained, the content of ZrO₂ is more preferably 1% or higher, still more preferably 2% or higher, still more preferably 3% or higher, especially preferably 4% or higher. Meanwhile, too high ZrO₂ contents render the glass prone to be devitrified. Consequently, in the case where producibility is especially important, the content of ZrO₂ is more preferably 15% or less, still more preferably 10% or less, still more preferably 6% or less, especially preferably 5% or less.

ZnO is a component which improves mechanical properties, including strength and crack resistance, of the glass, and the content of ZnO is 0% or higher and 15% or less. In the case where ZnO is contained, the content of ZnO is more preferably 0.3% or higher, still more preferably 0.5% or higher, especially preferably 1% or higher. Meanwhile, too high ZnO contents render the glass prone to be devitrified. Consequently, the content of ZnO is more preferably 10% or less, still more preferably 5% or less, still more preferably 2% or less, still more preferably 1% or less, especially preferably 0.5% or less.

La₂O₃ is a component which improves the refractive index of the glass, and the content of La₂O₃ is 0% or higher and 35% or less. In the case where La₂O₃ is contained, the content of La₂O₃ is preferably 2% or higher, more preferably 4% or higher, still more preferably 5% or higher, still more preferably 6% or higher, especially preferably 7% or higher. Meanwhile, too high La₂O₃ contents result in a decrease in mechanical property and an increase in devitrification temperature. Consequently, in the case where mechanical properties and producibility are important, the content of La₂O₃ is preferably 30% or less, more preferably 25% or less, still more preferably 20% or less, still more preferably 15% or less, still more preferably 10% or less, still more preferably 9% or less, especially preferably 8% or less.

In the case where the ratio of the total content of Nb₂O₅, TiO₂, WO₃, and Ta₂O₅ to the total content of La₂O₃, Gd₂O₃, Y₂O₃, and Yb₂O₃ [(Nb₂O₅+TiO₂+WO₃+Ta₂O₅)/(La₂O₃+Gd₂O₃+Y₂O₃+Yb₂O₃)] is too large, the glass is prone to have a color and a reduced transmittance. Consequently, (Nb₂O₅+TiO₂+WO₃+Ta₂O₅)/(La₂O₃+Gd₂O₃+Y₂O₃+Yb₂O₃) is preferably 10.0 or less, more preferably 8.0 or less, still more preferably 6.0 or less, still more preferably 5.0 or less, still more preferably 4.5 or less, especially preferably 4.0 or less. Meanwhile, in the case where (Nb₂O₅+TiO₂+WO₃+Ta₂O₅)/(La₂O₃+Gd₂O₃+Y₂O₃+Yb₂O₃) is too small, the glass is prone to have a lowered Tg. Consequently, for use in applications where high heat resistance is required, (Nb₂O₅+TiO₂+WO₃+Ta₂O₅)/(La₂O₃+Gd₂O₃+Y₂O₃+Yb₂O₃) is preferably 0.5 or larger, more preferably 1.0 or larger, still more preferably 2.0 or larger, still more preferably 3.0 or larger, especially preferably 3.5 or larger.

The glass composition A2 gives an optical glass having a high refractive index (n_{d}) in the range of 1.81 to 1.96. The refractive index (n_{d}) is 1.81 or higher. The optical glass is suitable for use as an optical glass for wearable appliances from the standpoints of an increase in image display angle, increases in luminance and contrast, an improvement in lightguide property, easiness of processing for producing diffraction gratings, etc. The optical glass is suitable also as a small-sized imaging glass lens with a wide imaging angle of view for use in applications such as in-vehicle cameras and visual sensors for robots, the lens being smaller and capable of wide-range imaging. The refractive index (n_{d}) of the glass is preferably 1.84 or higher, more preferably 1.86 or higher, still more preferably 1.87 or higher, still more preferably 1.88 or higher, still more preferably 1.89 or higher, especially preferably 1.90 or higher.

Meanwhile, in the case where the refractive index (n_{d}) of the glass exceeds 1.96, the glass tends to have an increased density and an elevated devitrification temperature. Especially in the case where it is important for the optical glass to have a low density, the refractive index (n_{d}) of the glass is preferably 1.94 or less, more preferably 1.93 or less, still more preferably 1.92 or less, still more preferably 1.91 or less, still more preferably 1.90 or less, still more preferably 1.89 or less, still more preferably 1.88 or less, yet still more preferably 1.87 or less.

The glass composition A2 gives an optical glass having a density (d) of 3.3 g/cm³ to 5.4 g/cm³. In the case where the optical glass has a density within the range, the user can have a comfortable wear feeling when the glass is used in wearable appliances and the overall apparatus weight can be reduced when the glass is used in in-vehicle cameras, visual sensors for robots, etc. The density (d) of the glass is preferably 5.2 g/cm³ or less, more preferably 5.0 g/cm³ or less, still more preferably 4.8 g/cm³ or less, still more preferably 4.6 g/cm³ or less, still more preferably 4.4 g/cm³ or less, still more preferably 4.2 g/cm³ or less.

Meanwhile, from the standpoint of making the surfaces of the optical glass less apt to be scratched, the density (d) of the glass is preferably 3.6 g/cm³ or higher. The density (d) of the glass is more preferably 3.8 g/cm³ or higher, still more preferably 4.0 g/cm³ or higher, still more preferably 4.2 g/cm³ or higher, especially preferably 4.3 g/cm³ or higher.

Furthermore, this optical glass has a devitrification temperature of 1,300°C or lower. The glass having this property can be inhibited from being devitrified when formed such that the glass has satisfactory formability. The devitrification temperature of the glass is more preferably 1,275°C or lower, still more preferably 1,240°C or lower, yet still more preferably 1,225°C or lower, yet still more preferably 1,200°C or lower, yet still more preferably 1,175°C or lower, yet still more preferably 1,150°C or lower, yet still more preferably 1,125°C or lower, yet still more preferably 1,100°C or lower, yet still more preferably 1,075°C or lower, especially preferably 1,050°C or lower. The devitrification temperature is a lowest temperature at which no crystals of 1 µm or larger in terms of major-side or major-axis dimension are observed in the surface and inside of the glass when the glass which has been heated and melted is allowed to cool naturally.

### <Glass Composition A3>

A glass composition that is the glass composition A described above in which the content of alkaline-earth metal components is higher than 5% but not higher than 50% and the B₂O₃ content is 15% or higher is referred to as glass composition A3, and components of the glass composition are explained below. Explanations of some of the components of the glass composition A3 are omitted here because these are the same as those of the corresponding components of the glass composition A.

SiO₂ is a glass-forming component and is a component which imparts high strength and crack resistance to the glass and improves the stability and chemical durability of the glass. The content of SiO₂ is preferably 5% or higher and 44% or less. In the case where the content of SiO₂ is 5% or higher, the temperature T₁ at which the glass viscosity is 10¹ dPa·s can be regulated to a value within the preferred range. The content of SiO₂ is preferably 5% or higher, more preferably 10% or higher, still more preferably 12% or higher, still more preferably 13% or higher, still more preferably 14% or higher, especially preferably 15% or higher. Meanwhile, in the case where the content of SiO₂ is 44% or less, components for obtaining a high refractive index can be contained. The content of SiO₂ is more preferably 37% or less, more preferably 30% or less, still more preferably 23% or less, still more preferably 20% or less, especially preferably 17% or less.

B₂O₃ is a glass-forming component and is essential. B₂O₃ is a component which lowers the Tg, improves mechanical properties, including strength and crack resistance, of the glass, and lowers the devitrification temperature. However, too high B₂O₃ contents are prone to result in a decrease in refractive index. Consequently, the content of B₂O₃ is preferably 15% or higher and 40% or less. The content of B₂O₃ is more preferably 35% or less, still more preferably 32% or less, still more preferably 29% or less, still more preferably 27% or less, especially preferably 26% or less. Meanwhile, the content of B₂O₃ is more preferably 18% or higher, still more preferably 21% or higher, still more preferably 23% or higher, especially preferably 24% or higher.

SiO₂ and B₂O₃ are glass-forming components and are components which improve the stability of the glass, and the total content of SiO₂ and B₂O₃ is 30% or higher and 70% or less. In the case where the total content of SiO₂ and B₂O₃ is high, the glass has a lowered devitrification temperature and is easy to produce. Consequently, the total content of SiO₂ and B₂O₃ is 30% or higher, preferably 32% or higher, more preferably 34% or higher, still more preferably 36% or higher, especially preferably 39% or higher. Meanwhile, by reducing the total content of SiO₂ and B₂O₃, an improvement in refractive index can be attained. Hence, in the case where an especially high refractive index is required, the total content of SiO₂ and B₂O₃ is preferably 70% or less, more preferably 60% or less, still more preferably 50% or less, still more preferably 45% or less, especially preferably 42% or less.

In the case where B₂O₃ is contained, the glass is prone to be devitrified if the ratio of the content of SiO₂ to the content of B₂O₃, SiO₂/B₂O₃, is high. Consequently, in the case where B₂O₃ is contained, SiO₂/B₂O₃ is preferably 5.0 or less, more preferably 3.0 or less, still more preferably 2.0 or less, still more preferably 1.5 or less, especially preferably 1.0 or less.

TiO₂, Ta₂O₅, WO₃, Nb₂O₅, ZrO₂, and Ln₂O₃ (Ln is at least one element selected from the group consisting of Y, La, Gd, Yb, and Lu) are high-refractive index components which heighten the refractive index of the glass. The total content of these components is preferably 30% or higher and 55% or less. In the case where an especially high refractive index is required, the total content of these components is preferably 33% or higher, more preferably 35% or higher, still more preferably 36% or higher, yet still more preferably 37% or higher, especially preferably 38% or higher. Meanwhile, in the case where the total content of these high-refractive index components is too high, the glass is prone to be devitrified. For use in applications where lower surface roughnesses Ra are required, the content of these components is more preferably 50% or less, still more preferably 45% or less, still more preferably 40% or less, especially preferably 35% or less.

The total content of alkali metal components (Li₂O+Na₂O+K₂O) is 0% or higher and 10% or less. By increasing the content of these alkali metal components, the Tg can be lowered. However, in the case where Li₂O+Na₂O+K₂O is too high, T₁ is prone to be low and the glass has a steep viscosity curve, resulting in reduced producibility. Meanwhile, in the case where Li₂O+Na₂O+K₂O is too low, T₁ is prone to be high and the glass requires higher temperatures for melting, and this may cause coloring. Consequently, in the case when one or more of Li₂O, Na₂O, and K₂O are contained, Li₂O+Na₂O+K₂O is preferably 0.5% or higher and 10% or less. Li₂O+Na₂O+K₂O is more preferably 1% or higher, still more preferably 1.5% or higher, still more preferably 2% or higher, especially preferably 3% or higher. Meanwhile, Li₂O+Na₂O+K₂O is preferably 6% or less, more preferably 4% or less, still more preferably 3% or less, especially preferably 2% or less.

The content of Li₂O is 0% or higher and 10% or less. In the case where Li₂O is contained, the content of Li₂O is 0.2% or higher and 10% or less. The inclusion of Li₂O can improve the strength (Kc) and crack resistance (CIL). In the case where the optical glass of the present invention contains Li₂O, the content of Li₂O is preferably 0.5% or higher, more preferably 1% or higher, still more preferably 1.5% or higher, especially preferably 2% or higher. Meanwhile, too high Li₂O contents are prone to result in devitrification. Especially in the case where devitrification is problematic, the content of Li₂O is preferably 6% or less, more preferably 3% or less, still more preferably 1% or less, especially preferably 0.1% or less.

In the case where the optical glass according to this embodiment is to be chemically strengthened, the content of Li₂O is preferably 3.0% or higher, more preferably 6.0% or higher, still more preferably 9.0% or higher, especially preferably 11.0% or higher.

CaO is a component which inhibits devitrification, but too high CaO contents are prone to reduce the crack resistance. Consequently, the content of CaO is preferably 0% or higher and 25% or less. The content of CaO is more preferably 20% or less, still more preferably 17% or less, still more preferably 14% or less, still more preferably 13% or less, still more preferably 12% or less, especially preferably 11.5% or less. Meanwhile, the content of CaO is more preferably 4% or higher, still more preferably 8% or higher, still more preferably 10% or higher, especially preferably 11% or higher.

SrO is a component which improves glass meltability, inhibits devitrification, and is useful in regulating optical constants of the glass. Meanwhile, too high SrO contents rather promote devitrification. Consequently, the content of SrO is preferably 0% or higher and 20% or less. The content of SrO is more preferably 15% or less, still more preferably 12% or less, still more preferably 10% or less, still more preferably 9% or less, especially preferably 8% or less. Meanwhile, the content of SrO is more preferably 2% or higher, still more preferably 5% or higher, especially preferably 7% or higher.

In the case where the total content of MgO, CaO, and SrO is too high, the glass is prone to be devitrified. Consequently, the total content of MgO, CaO, and SrO is preferably 30% or less. The total content of these components is more preferably 25% or less, still more preferably 22% or less, still more preferably 21% or less, still more preferably 20% or less, especially preferably 19.5% or less.

BaO is a component which inhibits devitrification, but too high BaO contents are prone to result in an increase in density. Consequently, in the case where BaO is contained, the content of BaO is preferably 0% or higher and 30% or less. The content of BaO is more preferably 20% or less, still more preferably 15% or less, still more preferably 11% or less, still more preferably 9% or less, especially preferably 8% or less. Meanwhile, the content of BaO is more preferably 2% or higher, still more preferably 5% or higher, especially preferably 7% or higher.

The total content of alkaline-earth metal components (MgO+CaO+SrO+BaO) is 5% or higher and 50% or less. The total content of these components is preferably 50% or less so that the glass can be inhibited from being devitrified. The total content of these components is more preferably 40% or less, still more preferably 35% or less, still more preferably 32% or less, still more preferably 30% or less, still more preferably 29% or less, still more preferably 28% or less, especially preferably 20% or less. The total content of these components is preferably 5% or higher so that the glass can have improved meltability. The total content of these components is more preferably 10% or higher, still more preferably 15% or higher, still more preferably 20% or higher, still more preferably 25% or higher, especially preferably 26% or higher.

By regulating the ratio of the content of BaO to the total content of the alkaline-earth metal components (MgO+CaO+SrO+BaO), (BaO/(MgO+CaO+SrO+BaO)), to 0.5 or less, a reduction in specific gravity can be attained. The ratio is preferably 0.45 or less, more preferably 0.42 or less, still more preferably 0.40 or less, especially preferably 0.35 or less. By heightening the proportion of BaO to the alkaline-earth metal components, the glass can be made to have a lowered devitrification temperature and improved producibility. In the case where producibility is especially important, the ratio is preferably 0.1 or larger, more preferably 0.2 or larger, still more preferably 0.25 or larger, especially preferably 0.3 or larger.

In the case where the total content of the alkali metal components (Li₂O+Na₂O+K₂O) and the alkaline-earth metal components (MgO+CaO+SrO+BaO) is too high, the glass is prone to have a lowered Tg. Consequently, the total content of the alkali metal components and the alkaline-earth metal components is preferably 30% or less, more preferably 29% or less, still more preferably 28% or less, especially preferably 27.5% or less.

TiO₂ is a component which heightens the refractive index of the glass to enhance dispersion by the glass, and the content of TiO₂ is 0% or higher and 50% or less. In the case where TiO₂ is contained, the content of TiO₂ is preferably 10% or higher, more preferably 15% or higher, still more preferably 17% or higher, still more preferably 19% or higher, still more preferably 20% or higher, especially preferably 20.5% or higher. Meanwhile, too high TiO₂ contents are prone to cause coloring and result in a decrease in transmittance. Consequently, especially in the case where transmittance is required, the content of TiO₂ is preferably 50% or less, more preferably 40% or less, still more preferably 30% or less, still more preferably 25% or less, still more preferably 23% or less, still more preferably 22% or less, especially preferably 21% or less.

In the case where B₂O₃ is contained, the glass requires higher temperatures for melting if the ratio of the content of TiO₂ to the content of B₂O₃, TiO₂/B₂O₃, is high. In such cases, the titanium is prone to be reduced and the glass is prone to take a color and have a reduced transmittance. Consequently, in the case where B₂O₃ is contained, TiO₂/B₂O₃ is preferably 5.0 or less, more preferably 4.0 or less, still more preferably 3.0 or less, still more preferably 2.0 or less, still more preferably 1.5 or less, still more preferably 1.2 or less, especially preferably 1.0 or less.

Nb₂O₅ is a component which heightens the refractive index of the glass and reduces the Abbe number (v_{d}) of the glass. The content of Nb₂O₅ is 0% or higher and 35% or less. The content of Nb₂O₅ is preferably 0.5% or higher, more preferably 1.0% or higher, still more preferably 1.5% or higher, still more preferably 2.0% or higher, especially preferably 2.5% or higher.

Meanwhile, too high Nb₂O₅ contents render the glass prone to be devitrified. Consequently, for use in applications where a lower surface roughness Ra is required, the content of Nb₂O₅ is preferably 20% or less, more preferably 10% or less, still more preferably 5% or less, especially preferably 3% or less.

In the case where the total content of TiO₂, WO₃, and Nb₂O₅ is too low, the glass has a reduced refractive index. Consequently, the total content of TiO₂, WO₃, and Nb₂O₅ is preferably 10% or higher and 50% or less. The total content of these components is more preferably 14% or higher, still more preferably 18% or higher, still more preferably 22% or higher, especially preferably 23% or higher. Meanwhile, in the case where the total content of TiO₂, WO₃, and Nb₂O₅ is too high, the glass is prone to be devitrified. Consequently, for use in applications where a lower surface roughness Ra is required, the total content of these components is preferably 40% or less, more preferably 35% or less, still more preferably 30% or less, especially preferably 25% or less.

ZrO₂ is a component which heightens the refractive index of the glass and enhances the chemical durability of the glass, and the content of ZrO₂ is 0% or higher and 20% or less. The inclusion of ZrO₂ can improve the crack resistance. In the case where ZrO₂ is contained, the content of ZrO₂ is more preferably 1% or higher, still more preferably 2% or higher, still more preferably 3% or higher, especially preferably 4% or higher. Meanwhile, too high ZrO₂ contents render the glass prone to be devitrified. Consequently, in the case where producibility is especially important, the content of ZrO₂ is more preferably 15% or less, still more preferably 10% or less, still more preferably 6% or less, especially preferably 5% or less.

ZnO is a component which improves mechanical properties, including strength and crack resistance, of the glass, and the content of ZnO is 0% or higher and 15% or less. In the case where ZnO is contained, the content of ZnO is more preferably 0.3% or higher, still more preferably 0.5% or higher, especially preferably 1% or higher. Meanwhile, too high ZnO contents render the glass prone to be devitrified. Consequently, the content of ZnO is more preferably 10% or less, still more preferably 5% or less, still more preferably 2% or less, still more preferably 1% or less, especially preferably 0.5% or less.

La₂O₃ is a component which improves the refractive index of the glass, and the content of La₂O₃ is 0% or higher and 35% or less. In the case where La₂O₃ is contained, the content of La₂O₃ is preferably 2% or higher, more preferably 3% or higher, still more preferably 4% or higher, still more preferably 4.5% or higher, especially preferably 5% or higher. Meanwhile, too high La₂O₃ contents result in a decrease in mechanical property and an increase in devitrification temperature. Consequently, in the case where mechanical properties and producibility are important, the content of La₂O₃ is preferably 30% or less, more preferably 25% or less, still more preferably 20% or less, still more preferably 15% or less, still more preferably 10% or less, still more preferably 7% or less, especially preferably 6% or less.

In the case where the ratio of the total content of Nb₂O₅, TiO₂, WO₃, and Ta₂O₅ to the total content of La₂O₃, Gd₂O₃, Y₂O₃, and Yb₂O₃ [(Nb₂O₅+TiO₂+WO₃+Ta₂O₅)/(La₂O₃+Gd₂O₃+Y₂O₃+Yb₂O₃)] is too large, the glass is prone to have a color and a reduced transmittance. Consequently, (Nb₂O₅+TiO₂+WO₃+Ta₂O₅)/(La₂O₃+Gd₂O₃+Y₂O₃+Yb₂O₃) is preferably 10.0 or less, more preferably 8.0 or less, still more preferably 7.0 or less, still more preferably 6.0 or less, still more preferably 5.5 or less, especially preferably 5.0 or less. Meanwhile, in the case where (Nb₂O₅+TiO₂+WO₃+Ta₂O₅)/(La₂O₃+Gd₂O₃+Y₂O₃+Yb₂O₃) is too small, the glass is prone to have a lowered Tg. Consequently, for use in applications where high heat resistance is required, (Nb₂O₅+TiO₂+WO₃+Ta₂O₅)/(La₂O₃+Gd₂O₃+Y₂O₃+Yb₂O₃) is preferably 0.5 or larger, more preferably 1.0 or larger, still more preferably 2.0 or larger, still more preferably 3.0 or larger, especially preferably 4.0 or larger.

The glass composition A3 gives an optical glass having a high refractive index (n_{d}) in the range of 1.81 to 1.96. The refractive index (n_{d}) is 1.81 or higher. The optical glass is suitable for use as an optical glass for wearable appliances from the standpoints of an increase in image display angle, increases in luminance and contrast, an improvement in lightguide property, easiness of processing for producing diffraction gratings, etc. The optical glass is suitable also as a small-sized imaging glass lens with a wide imaging angle of view for use in applications such as in-vehicle cameras and visual sensors for robots, the lens being smaller and capable of wide-range imaging. The refractive index (n_{d}) is preferably 1.820 or higher, more preferably 1.830 or higher, still more preferably 1.835 or higher, still more preferably 1.840 or higher, still more preferably 1.845 or higher, especially preferably 1.850 or higher.

Meanwhile, in the case where the refractive index (n_{d}) exceeds 1.96, the glass tends to have an increased density and an elevated devitrification temperature. Especially in the case where it is important for the optical glass to have a low density, the refractive index (n_{d}) of the glass is preferably 1.92 or less, more preferably 1.90 or less, still more preferably 1.89 or less, still more preferably 1.88 or less, still more preferably 1.87 or less, still more preferably 1.86 or less, still more preferably 1.855 or less, yet still more preferably 1.853 or less.

The glass composition A3 gives an optical glass having a density (d) of 3.3 g/cm³ to 5.4 g/cm³. Since the optical glass has a density within that range, the user can have a comfortable wear feeling when the glass is used in wearable appliances and the overall apparatus weight can be reduced when the glass is used in in-vehicle cameras, visual sensors for robots, etc. The density (d) of the glass is preferably 5.2 g/cm³ or less, more preferably 5.0 g/cm³ or less, still more preferably 4.6 g/cm³ or less, still more preferably 4.2 g/cm³ or less, still more preferably 4.1 g/cm³ or less, still more preferably 4.0 g/cm³ or less.

Meanwhile, from the standpoint of making the surfaces of the optical glass less apt to be scratched, the density (d) of the glass is preferably 3.6 g/cm³ or higher. The density (d) of the glass is more preferably 3.7 g/cm³ or higher, still more preferably 3.8 g/cm³ or higher, still more preferably 3.9 g/cm³ or higher, especially preferably 3.95 g/cm³ or higher.

Furthermore, the optical glass has a devitrification temperature of 1,300°C or lower. The glass having this property can be inhibited from being devitrified when formed and has satisfactory formability. The devitrification temperature of the glass is more preferably 1,275°C or lower, still more preferably 1,240°C or lower, yet still more preferably 1,225°C or lower, yet still more preferably 1,200°C or lower, yet still more preferably 1,175°C or lower, yet still more preferably 1,150°C or lower, yet still more preferably 1,100°C or lower, yet still more preferably 1,050°C or lower, yet still more preferably 1,025°C or lower, especially preferably 1,020°C or lower. The devitrification temperature is a lowest temperature at which no crystals of 1 µm or larger in terms of major-side or major-axis dimension are observed in the surface and inside of the glass when the glass which has been heated and melted is allowed to cool naturally.

### [Methods for producing Optical Glass and Formed Glass Objects]

An optical glass of the present invention is produced, for example, in the following manner. First, given amounts of raw materials are weighed out so as to result in any of the predetermined glass compositions shown above, and are evenly mixed. The obtained mixture is charged into a platinum crucible, quartz crucible, or alumina crucible and roughly melted. Thereafter, this mixture is introduced into a gold crucible, platinum crucible, platinum alloy crucible, reinforced platinum crucible, or iridium crucible, melted by heating at a temperature in the range of 1,200°C to 1,400°C for 2 to 10 hours, homogenized by defoaming, stirring, etc., and then poured into a mold and gradually cooled. Thus, the optical glass of the present invention is obtained.

This optical glass can be obtained also as a glass plate by forming the molten glass into a plate shape by a forming method such as a float process, a fusion process, or a roll-out process. Alternatively, the molten glass may be temporarily formed into a block shape and then formed into a glass plate by a redrawing process, etc. Furthermore, a method such as, for example, reheating press forming or precision press forming can be used to produce a formed glass object. Specifically, use can be made of: a method in which a lens preform for mold press forming is produced from the optical glass and this lens preform is subjected to reheating press forming and then polishing to produce a formed glass object; or a method in which a lens preform produced through, for example, polishing is subjected to precision press forming to produce a formed glass object. Methods for producing formed glass objects are not limited to those shown above.

The number of residual bubbles present in the thus-produced optical glass of the present invention per kg is preferably 10 bubbles per kg or less, more preferably 7 bubbles per kg or less, still more preferably 5 bubbles per kg or less, especially preferably 3 bubbles per kg or less. In the case where glass plates are to be produced by the methods shown above, bubble-free glass plates can be efficiently formed so long as the number of residual bubbles is 10 or less per kg. In the case where the diameter of a minimum circle in which a residual bubble is included is taken as the size of the residual bubble, the size of each residual bubble is preferably 80 µm or less, more preferably 60 µm or less, still more preferably 40 µm or less, especially preferably 20 µm or less.

Furthermore, in the case where the diameter is regarded as the longitudinal-direction length L₁ of the residual bubble and where the length of a straight line which corresponds to the maximum dimension of the residual bubble in the direction perpendicular to the diameter is regarded as the transverse-direction length L₂ of the residual bubble, in terms of the shape of the residual bubble, the aspect ratio L₂/L₁ is preferably 0.90 or larger, more preferably 0.92 or larger, still more preferably 0.95 or larger. So long as the L₂/L₁ is 0.90 or larger, the shape of the residual bubbles is close to a complete circle (complete sphere). Even if such residual bubbles are contained, these bubbles are less apt to reduce the strength of the glass as compared with elliptic residual bubbles, and cracks originating from residual bubbles can be inhibited from occurring when glass plates are produced from the glass. In addition, such residual bubbles in a glass substrate have the effect of being less causative of the anisotropic scattering of light which has entered the glass plate, as compared with elliptic residual bubbles. The size and shape of residual bubbles are obtained from values measured with a laser microscope (VK-X100, manufactured by Keyence Corp.).

Optical members such as the glass plates and formed glass objects thus produced are useful as or in various optical elements. In particular, such optical members are suitable as (1) lightguides, filters, lenses, and the like for use in wearable appliances, e.g., spectacles equipped with a projector, spectacle- or goggle-type displays, virtual-reality or augmented-reality display devices, and virtual-image display devices, and (2) lenses, cover glasses, and the like for use in in-vehicle cameras and visual sensors for robots. The optical members are suitable for use even in applications where the optical members are exposed to severe environments, as in in-vehicle cameras. Furthermore, the optical members are suitable also in applications such as glass substrates for organic EL, substrates for wafer level lens arrays, substrates for lens units, substrates for lens formation by etching, and optical waveguides.

The optical glass according to this embodiment described above has a high refractive index and a low density, has satisfactory producibility, and is suitable for use as an optical glass for wearable appliances and for mounting on vehicles and robots. Moreover, an optical component obtained by coating a main surface of this optical glass with an antireflection film constituted of a multilayered dielectric film including 4 to 10 layers formed by alternately depositing a low-refractive index film of, for example, SiO₂, and a high-refractive index film of, for example, TiO₂ is also suitable for use in wearable appliances and for mounting on vehicles and robots.

### EXAMPLES

Raw materials were weighed out so as to result in each of the chemical compositions (in mol% based on oxides) shown in Tables 1 to 9. As the raw materials, high-purity raw materials for ordinary optical glasses, such as oxides, hydroxides, carbonates, nitrates, fluorides, hydroxides, and metaphosphoric acid compounds, which corresponded to the respective components were selected and used.

The weighed raw materials were evenly mixed, and the mixture was put into a platinum crucible having a capacity of about 300 mL and melted, refined, and stirred at about 1,300°C for about 2 hours. Thereafter, the melt was held at 1,300°C for 0.5 hours, poured into a rectangular mold having dimensions of 50 mm (length) × 100 mm (width) preheated at about 650°C, and then gradually cooled at about 1 °C/min. Thus, samples of Examples 1 to 85 were obtained, in which Examples 1 to 80 are examples according to the present invention and Examples 81 to 85 are comparative examples.

### [Evaluation]

The samples obtained above were examined for refractive index (n_{d}), density (d), devitrification temperature, and viscosity (temperature T₁ at which the glass has a viscosity of 10¹ dPa·s) in the following manners. The results obtained are shown together in Tables 1 to 9.

Refractive index (n_{d}): Each sample glass was processed into a triangular prism shape which had a thickness of 10 mm and in which each side had a length of 30 mm, and this prism was examined with a refractometer (device name, KPR-2000; manufactured by Kalnew Corp.).

Density (d): Measurement was made in accordance with JIS Z8807 (1976; a measuring method of weighing performed in liquid).

Devitrification temperature: About 5 g of each sample was put on a platinum dish, held for 1 hour at temperatures ranging from 1,000°C to 1,400°C at intervals of 5°C, and then allowed to cool naturally. Thereafter, the sample was observed with a microscope to confirm whether precipitation of crystals occurred or not. The minimum temperature which had not resulted in the precipitation of crystals of 1 µm or larger in terms of major-side or major-axis dimension was taken as the devitrification temperature.

Temperature T₁: The glass was examined for viscosity with a rotational viscometer in accordance with the method provided for in ASTM C 965-96, and the temperature T₁ (°C) at which the glass had a viscosity of 10¹ dPa·s was measured.

Glass transition point (Tg): A value measured with a differential dilatometer (TMA); the value was determined in accordance with JIS R3101-3 (year 2001).

Young's modulus (E): A plate-shaped sample having dimensions of 20 mm × 20 mm × 1 mm was examined for Young's modulus (unit: GPa) with an ultrasonic precision thickness meter (MODEL 38DL PLUS, manufactured by OLYMPUS Co., Ltd.).

LTV: A glass substrate was examined for thickness by examining a plate-shaped sample thereof having dimensions of 50 mm × 50 mm × 1 mm at intervals of 3 mm with a non-contact laser displacement meter (NANOMETRO, manufactured by KURODA Precision Industries). The LTV was calculated therefrom.

Warpage: The heights of the two main surfaces of a glass substrate were measured by examining a disk-shaped sample having dimensions of 8 inches (diameter) × 1 mm and a disk-shaped sample having dimensions of 6 inches (diameter) × 1 mm with the non-contact laser displacement meter (NANOMETRO, manufactured by KURODA Precision Industries) at intervals of 3 mm. The warpage was calculated by the method explained above with reference to FIG. 1.

Surface roughness (Ra): A value determined through an examination of a 10 µm × 10 µm area of a plate-shaped sample having dimensions of 20 mm × 20 mm × 1 mm with an atomic force microscope (AFM) (manufactured by Oxford Instruments).

Abbe number (v_{d}): The sample used in the refractive index measurement is used, and the Abbe number is calculated using v_{d}=(n_{d}-1)/(n_{F}-n_{C}), where n_{d}, n_{F}, n_{C} are refractive indexes for helium d line, hydrogen F line, and hydrogen C line, respectively. These refractive indexes also were measured with the refractometer.

Coefficient of thermal expansion (α): Using a differential dilatometer (TMA), coefficients of thermal expansion were measured at temperatures in the range of 50°C to 350°C. An average coefficient of thermal expansion for the range of 50°C to 350°C was determined in accordance with JIS R3102 (1995).

**Table 1**

| | Example 1 | Example 2 | Example 3 | Example 4 | Example 5 | Example 6 | Example 7 | Example 8 | Example 9 | Example 10 |
|---|---|---|---|---|---|---|---|---|---|---|
| P₂O₅ | | | | | | | | | | |
| SiO₂ | 26.0 | 22.0 | 23.0 | 26.0 | 26.0 | 26.0 | 30.0 | 30.0 | 30.0 | 30.0 |
| B₂O₃ | 14.0 | 18.0 | 14.0 | 14.0 | 10.0 | 10.0 | 10.0 | 10.0 | 10.0 | 10.0 |
| MgO | | | | | | | | | | |
| CaO | 16.0 | 16.0 | 18.0 | 16.0 | 16.0 | 16.0 | 16.0 | 7.0 | 5.0 | 7.0 |
| SrO | | | | | | 3.0 | | 7.0 | 7.0 | 7.0 |
| BaO | 7.0 | 7.0 | 7.0 | 7.0 | 11.0 | 5.0 | 7.0 | 9.0 | 7.0 | 11.0 |
| Li₂O | 2.0 | 2.0 | 3.0 | 2.0 | 2.0 | 2.0 | 2.0 | 2.0 | 2.0 | |
| Na₂O | | | | | | | | | | |
| K₂O | | | | | | | | | | |
| Al₂O₃ | | | | | | | | | | |
| Y₂O₃ | | | | | | | | | | |
| TiO₂ | 19.0 | 19.0 | 15.0 | 19.0 | 19.0 | 19.0 | 19.0 | 19.0 | 19.0 | 19.0 |
| Ta₂O₅ | | | | | 2.0 | | | | | |
| WO₃ | | | | | | | | | | |
| Nb₂O₅ | 5.0 | 5.0 | 6.0 | 5.0 | 3.0 | 5.0 | 5.0 | 5.0 | 5.0 | 5.0 |
| La₂O₃ | 9.0 | 9.0 | 12.0 | 5.0 | 9.0 | 9.0 | 9.0 | 9.0 | 9.0 | 9.0 |
| ZrO₂ | 2.0 | 2.0 | 2.0 | 2.0 | 2.0 | 2.0 | 2.0 | 2.0 | 2.0 | 2.0 |
| Bi₂O₃ | | | | | | | | | | |
| ZnO | | | | | | 3.0 | | | 4.0 | |
| Gd₂O₃ | | | | 4.0 | | | | | | |
| Sum | 100 | 100 | 100 | 100 | 100 | 100 | 100 | 100 | 100 | 100 |
| SiO₂+Bi₂O₃ | 40.0 | 40.0 | 37.0 | 40.0 | 36.0 | 36.0 | 40.0 | 40.0 | 40.0 | 40.0 |
| TiO₂+Ta₂O₅+WO₃+Nb₂O₅+ ZrO₂+Ln₂O₃ | 33.0 | 33.0 | 33.0 | 33.0 | 35.0 | 35.0 | 35.0 | 35.0 | 35.0 | 35.0 |
| BaO/(MgO+CaO+SrO+BaO) | 0.3 | 0.3 | 0.3 | 0.3 | 0.4 | 0.2 | 0.3 | 0.4 | 0.4 | 0.4 |
| SiO₂/B₂O₃ | 1.9 | 1.2 | 1.6 | 1.9 | 2.6 | 2.6 | 3.0 | 3.0 | 3.0 | 3.0 |
| Li₂O+Na₂O+K₂O | 2.0 | 2.0 | 3.0 | 2.0 | 2.0 | 2.0 | 2.0 | 2.0 | 2.0 | 0.0 |
| Li₂O+Na₂O | 2.0 | 2.0 | 3.0 | 2.0 | 2.0 | 2.0 | 2.0 | 2.0 | 2.0 | 0.0 |
| MgO+CaO+SrO | 16.0 | 16.0 | 18.0 | 16.0 | 16.0 | 19.0 | 16.0 | 14.0 | 12.0 | 14.0 |
| Li₂O+Na₂O+K₂O+MgO+CaO+ SrO+BaO | 25.0 | 25.0 | 28.0 | 25.0 | 29.0 | 26.0 | 25.0 | 25.0 | 21.0 | 25.0 |
| TiO₂/B₂O₃ | 1.4 | 1.1 | 1.1 | 1.4 | 1.9 | 1.9 | 1.9 | 1.9 | 1.9 | 1.9 |
| TiO₂+WO₃+Nb₂O₅ | 24.0 | 24.0 | 21.0 | 24.0 | 22.0 | 24.0 | 24.0 | 24.0 | 24.0 | 24.0 |
| (ZrO₂+Ta₂O₅+Nb₂O₅)/(SiO₂+B₂O₃) | 0.2 | 0.2 | 0.2 | 0.2 | 0.2 | 0.2 | 0.2 | 0.2 | 0.2 | 0.2 |
| (Nb₂O₅+TiO₂+WO₃+Ta₂O₅)/ (La₂O₃+Gd₂O₃+Y₂O₃+ Yb₂O₃) | 2.7 | 2.7 | 1.8 | 2.7 | 2.7 | 2.7 | 2.7 | 2.7 | 2.7 | 2.7 |
| MgO+CaO+SrO+BaO | 23.00 | 23.00 | 25.00 | 23.00 | 27.00 | 24.00 | 23.00 | 23.00 | 19.00 | 25.00 |
| Refractive index (nd) | 1.88 | 1.88 | 1.89 | 1.88 | 1.89 | 1.89 | 1.88 | 1.88 | 1.89 | 1.88 |
| Density (d) [g/cm³] | 4.1 | 4.1 | 4.3 | 4.2 | 4.3 | 4.2 | 4.2 | 4.3 | 4.3 | 4.3 |
| Devitrification temperature [°C] | 1125 | 1125 | 1150 | 1150 | 1150 | 1150 | 1150 | 1150 | 1150 | 1150 |
| Temperature T1 [°C] | 1086 | 1057 | 1080 | 1098 | 1103 | 1097 | 1123 | 1123 | 1116 | 1144 |
| Devitrification viscosity | 0.7 | 0.4 | 0.3 | 0.5 | 0.6 | 0.5 | 0.8 | 0.8 | 0.7 | 1.0 |
| Light transmittance (T360) [%] | | | | | | | | | | |
| Glass transition point (Tg) [°C] | 653 | 645 | 647 | 664 | 650 | 654 | 662 | 660 | 658 | 671 |
| Young's modulus (E) [Gpa] | | | | | | | | | | |
| Abbe number (vd) | 30 | 30 | 32 | 30 | 30 | 30 | 30 | 30 | 30 | 30 |
| Coefficient of thermal expansion α (50-350°C)[×10⁻⁷/K] | 87 | 87 | 95 | 87 | 93 | 88 | 87 | 89 | 86 | 88 |

**Table 2**

| | Example 11 | Example 12 | Example 13 | Example 14 | Example 15 | Example 16 | Example 17 | Example 18 | Example 19 | Example 20 |
|---|---|---|---|---|---|---|---|---|---|---|
| P₂O₅ | | | | | | | | | | |
| SiO₂ | 30.0 | 30.0 | 30.0 | 30.0 | 30.0 | 30.0 | 30.0 | 27.0 | 30.0 | 30.0 |
| B₂O₃ | 10.0 | 10.0 | 10.0 | 10.0 | 5.0 | 8.0 | 8.0 | 10.0 | 7.2 | 8.0 |
| MgO | | | | | | | | | | |
| CaO | 7.0 | 7.0 | 7.0 | 14.2 | 17.0 | 6.4 | 6.4 | 7.4 | 6.4 | 6.4 |
| SrO | 7.0 | 7.0 | 7.0 | | | 7.6 | 7.6 | 7.7 | 7.6 | 7.6 |
| BaO | 9.0 | 9.0 | 9.0 | 5.8 | 8.0 | 9.0 | 8.8 | 8.9 | 9.0 | 8.8 |
| Li₂O | 2.0 | 2.0 | 2.0 | 5.0 | 5.0 | 2.0 | 2.0 | 2.0 | 2.0 | 2.0 |
| Na₂O | | | | | | | | | | |
| K₂O | | | | | | | | | | |
| Al₂O₃ | | | | | | | | | | |
| Y₂O₃ | | | | | | | | | | |
| TiO₂ | 19.0 | 21.0 | 21.0 | 21.0 | 21.0 | 22.0 | 20.9 | 20.5 | 21.2 | 20.9 |
| Ta₂O₅ | | | | | | | | | | |
| WO₃ | | | | | | | | | | |
| Nb₂O₅ | 3.0 | 5.0 | 3.0 | 5.0 | 5.0 | 5.5 | 6.3 | 6.5 | 6.0 | 5.8 |
| La₂O₃ | 9.0 | 7.0 | 9.0 | 7.0 | 7.0 | 7.5 | 6.8 | 6.0 | 6.1 | 6.8 |
| ZrO₂ | 4.0 | 2.0 | 2.0 | 2.0 | 2.0 | 2.0 | 3.2 | 4.0 | 3.0 | 3.7 |
| Bi₂O₃ | | | | | | | | | | |
| ZnO | | | | | | | | | | |
| Gd₂O₃ | | | | | | | | | 1.5 | |
| Sum | 100 | 100 | 100 | 100 | 100 | 100 | 100 | 100 | 100 | 100 |
| SiO₂+Bi₂O₃ | 40.0 | 40.0 | 40.0 | 40.0 | 35.0 | 38.0 | 38.0 | 37.0 | 37.2 | 38.0 |
| TiO₂+Ta₂O₅+WO₃+Nb₂O₅+ ZrO₂+Ln₂O₃ | 35.0 | 35.0 | 35.0 | 35.0 | 35.0 | 37.0 | 37.2 | 37.0 | 37.8 | 37.2 |
| BaO/(MgO+CaO+SrO+BaO) | 0.4 | 0.4 | 0.4 | 0.3 | 0.3 | 0.4 | 0.4 | 0.4 | 0.4 | 0.4 |
| SiO₂/B₂O₃ | 3.0 | 3.0 | 3.0 | 3.0 | 6.0 | 3.8 | 3.8 | 2.7 | 4.2 | 3.8 |
| Li₂O+Na₂O+K₂O | 2.0 | 2.0 | 2.0 | 5.0 | 5.0 | 2.0 | 2.0 | 2.0 | 2.0 | 2.0 |
| Li₂O+Na₂O | 2.0 | 2.0 | 2.0 | 5.0 | 5.0 | 2.0 | 2.0 | 2.0 | 2.0 | 2.0 |
| MgO+CaO+SrO | 14.0 | 14.0 | 14.0 | 14.2 | 17.0 | 14.0 | 14.0 | 15.1 | 14.0 | 14.0 |
| Li₂O+Na₂O+K₂O+MgO+CaO+ SrO+BaO | 25.0 | 25.0 | 25.0 | 25.0 | 30.0 | 25.0 | 24.8 | 26.0 | 25.0 | 24.8 |
| TiO₂/B₂O₃ | 1.9 | 2.1 | 2.1 | 2.1 | 4.2 | 2.8 | 2.6 | 2.1 | 2.9 | 2.6 |
| TiO₂+WO₃+Nb₂O₅ | 22.0 | 26.0 | 24.0 | 26.0 | 26.0 | 27.5 | 27.2 | 27.0 | 27.2 | 26.7 |
| (ZrO₂+Ta₂O₅+Nb₂O₅)/(SiO₂+B₂O₃) | 0.2 | 0.2 | 0.1 | 0.2 | 0.2 | 0.2 | 0.3 | 0.3 | 0.2 | 0.3 |
| (Nb₂O₅+TiO₂+WO₃+Ta₂O₅)/ (La₂O₃+Gd₂O₃+Y₂O₃+Yb₂O₃) | 2.4 | 3.7 | 2.7 | 3.7 | 3.7 | 3.7 | 4.0 | 4.5 | 3.6 | 3.9 |
| MgO+CaO+SrO+BaO | 23.00 | 23.00 | 23.00 | 20.00 | 25.00 | 23.00 | 22.80 | 24.00 | 23.00 | 22.80 |
| Refractive index (nd) | 1.87 | 1.88 | 1.87 | 1.89 | 1.89 | 1.89 | 1.90 | 1.90 | 1.91 | 1.90 |
| Density (d) [g/cm³] | 4.3 | 4.2 | 4.3 | 4.0 | 4.1 | 4.2 | 4.2 | 4.2 | 4.2 | 4.2 |
| Devitrification temperature [°C] | 1150 | 1100 | 1150 | 1135 | 1135 | 1180 | 1150 | 1165 | 1160 | 1160 |
| Temperature T1 [°C] | 1137 | 1113 | 1126 | 1092 | 1110 | 1127 | 1129 | 1109 | 1137 | 1136 |
| Devitrification viscosity | 0.9 | 1.1 | 0.8 | 0.6 | 0.8 | 0.6 | 0.8 | 0.5 | 0.8 | 0.8 |
| Light transmittance (T360) [%] | | | | | | | | | | |
| Glass transition point (Tg) [°C] | 658 | 658 | 654 | 640 | 639 | 663 | 667 | 662 | 672 | 667 |
| Young's modulus (E) [Gpa] | | | | | | | | | | |
| Abbe number (vd) | 31 | 29 | 31 | 32 | 32 | 30 | 35 | 28 | 27 | 30 |
| Coefficient of thermal expansion *α* (50-350°C)[×10⁻⁷ /K] | 91 | 86 | 91 | 87 | 92 | 88 | 86 | 85 | 88 | 86 |

**Table 3**

| | Example 21 | Example 22 | Example 23 | Example 24 | Example 25 | Example 26 | Example 27 | Example 28 | Example 29 | Example 30 |
|---|---|---|---|---|---|---|---|---|---|---|
| P₂O₅ | | | | | | | | | | |
| SiO₂ | 11.2 | 11.2 | 11.2 | 11.2 | 11.2 | 11.2 | 11.2 | 11.2 | 9.0 | 10.4 |
| b₂O₃ | 21.2 | 22.2 | 21.2 | 20.9 | 20.9 | 20.9 | 20.9 | 20.9 | 23.0 | 19.7 |
| MgO | | | | | | | | | | |
| CaO | | | | | | | | | | |
| SrO | | | | | | | | | | |
| BaO | | | | | | | | | | |
| Li₂O | 3.7 | 3.7 | 3.7 | | | | | | | 2.0 |
| Na₂O | | | | | | | | | | |
| K₂O | | | | | | | | | | |
| Al₂O₃ | | | | | | | | | | |
| Y₂O₃ | | | | 5.8 | 3.5 | 3.4 | 6.0 | 3.4 | 5.8 | 3.4 |
| TiO₂ | 29.5 | 27.0 | 29.5 | 31.1 | 31.1 | 31.1 | 26.1 | 33.2 | 31.1 | 33.2 |
| Ta₂O₅ | | | | | | | | | | |
| WO₃ | | | | | | | | | | |
| Nb₂O₅ | 3.0 | 6.0 | 4.5 | 2.6 | 2.6 | 2.6 | 3.3 | 2.6 | 2.6 | 2.6 |
| La₂O₃ | 19.6 | 18.6 | 18.6 | 17.6 | 19.2 | 20.6 | 24.3 | 18.4 | 21.6 | 18.4 |
| ZrO₂ | 6.5 | 6.5 | 6.5 | 6.9 | 6.9 | 6.9 | 7.0 | 6.9 | 6.9 | 6.9 |
| Bi₂O₃ | | | | | | | | | | |
| ZnO | | | | | | | | | | |
| Gd₂O₃ | 5.3 | 4.8 | 4.8 | 4.0 | 4.6 | 3.4 | 1.2 | 3.4 | | 3.4 |
| Sum | 100 | 100 | 100 | 100 | 100 | 100 | 100 | 100 | 100 | 100 |
| SiO₂+Bi₂O₃ | 32.4 | 33.4 | 32.4 | 32.1 | 32.1 | 32.1 | 32.1 | 32.1 | 32.0 | 30.1 |
| TiO₂+Ta₂O₅+WO₃+Nb₂O₅+ ZrO₂+Ln₂O₃ | 63.9 | 62.9 | 63.9 | 67.9 | 67.9 | 67.9 | 67.9 | 67.9 | 68.0 | 67.9 |
| BaO/(M_{g}O+CaO+SrO+BaO) | - | - | - | - | - | - | - | - | - | - |
| SiO₂/B₂O₃ | 0.5 | 0.5 | 0.5 | 0.5 | 0.5 | 0.5 | 0.5 | 0.5 | 0.4 | 0.5 |
| Li₂O+Na₂O+K₂O | 3.7 | 3.7 | 3.7 | 0.0 | 0.0 | 0.0 | 0.0 | 0.0 | 0.0 | 2.0 |
| Li₂O+Na₂O | 3.7 | 3.7 | 3.7 | 0.0 | 0.0 | 0.0 | 0.0 | 0.0 | 0.0 | 2.0 |
| MgO+CaO+SrO | 0.0 | 0.0 | 0.0 | 0.0 | 0.0 | 0.0 | 0.0 | 0.0 | 0.0 | 0.0 |
| Li₂O+Na₂O+K₂O+MgO+CaO+ SrO+BaO | 3.7 | 3.7 | 3.7 | 0.0 | 0.0 | 0.0 | 0.0 | 0.0 | 0.0 | 2.0 |
| TiO₂/B₂O₃ | 1.4 | 1.2 | 1.4 | 1.5 | 1.5 | 1.5 | 1.2 | 1.6 | 1.4 | 1.7 |
| TiO₂+WO₃+Nb₂O₅ | 32.5 | 33.0 | 34.0 | 33.6 | 33.7 | 33.7 | 29.4 | 35.8 | 33.7 | 35.8 |
| (ZrO₂+Ta₂O₅+Nb₂O₅)/(SiO₂+B₂O₃) | 0.3 | 0.4 | 0.3 | 0.3 | 0.3 | 0.3 | 0.3 | 0.3 | 0.3 | 0.3 |
| (Nb₂O₅+TiO₂+WO₃+Ta₂O₅)/ (La₂O₃+Gd₂O₃+Y₂O₃+Yb₂O₃) | 1.3 | 1.4 | 1.5 | 1.2 | 1.2 | 1.2 | 0.9 | 1.4 | 1.2 | 1.4 |
| MgO+CaO+SrO+BaO | 0.00 | 0.00 | 0.00 | 0.00 | 0.00 | 0.00 | 0.00 | 0.00 | 0.00 | 0.00 |
| Refractive index (nd) | 1.99 | 2.00 | 2.00 | 2.00 | 2.00 | 2.01 | 1.99 | 2.01 | 2.00 | 2.01 |
| Density (d) [g/cm³] | 5.0 | 4.9 | 4.9 | 5.0 | 5.0 | 5.0 | 5.1 | 4.9 | 4.9 | 4.9 |
| Devitrification temperature [°C] | 1140 | 1200 | 1175 | 1200 | 1200 | 1160 | 1200 | 1140 | 1160 | 1200 |
| Temperature T1 [°C] | 1082 | 1075 | 1070 | 1121 | 1115 | 1118 | 1137 | 1109 | 1102 | 1100 |
| Devitrification viscosity | 0.7 | 0.4 | 0.4 | 0.4 | 0.5 | 0.7 | 0.5 | 0.8 | 0.6 | 0.4 |
| Light transmittance (T360) [%] | | | | | | | | | | |
| Glass transition point (Tg) [°C] | 694 | 698 | 695 | 732 | 730 | 727 | 733 | 721 | 717 | 710 |
| Young's modulus (E) [Gpa] | | | | | | | | | | |
| Abbe number (vd) | 28 | 28 | 28 | 28 | 28 | 28 | 30 | 27 | 28 | 27 |
| Coefficient of thermal expansion α (50-350°C)[×10⁻⁷/K] | 106 | 101 | 103 | 92 | 97 | 97 | 98 | 94 | 92 | 98 |

**Table 4**

| | Example 31 | Example 32 | Example 33 | Example 34 | Example 35 | Example 36 | Example 37 | Example 38 | Example 39 | Example 40 |
|---|---|---|---|---|---|---|---|---|---|---|
| P₂O₅ | | | | | | | | | | |
| SiO₂ | 10.4 | 11.2 | 11.2 | 11.2 | 11.2 | 11.2 | 11.2 | 11.2 | 11.2 | 11.2 |
| B₂O₃ | 19.7 | 20.9 | 20.9 | 20.9 | 20.9 | 20.9 | 20.9 | 20.9 | 20.9 | 20.9 |
| MgO | | | | | | | | | | |
| CaO | 2.0 | | | | | | | | | |
| SrO | | | | | | | | | | |
| BaO | | | | | | | | | | |
| Li₂O | | | | | | | | | | |
| Na₂O | | | | | | | | | | |
| K₂O | | | | | | | | | | |
| Al₂O₃ | | | | | | | | | | |
| Y₂O₃ | 3.4 | 4.0 | 3.4 | 4.0 | 3.4 | 4.4 | 4.2 | 3.4 | 3.4 | 3.7 |
| TiO₂ | 33.2 | 31.8 | 32.0 | 33.2 | 33.2 | 32.3 | 33.2 | 33.2 | 31.7 | 32.9 |
| Ta₂O₅ | | | | | | | | | | |
| WO₃ | | | | | | | | | | |
| Nb₂O₅ | 2.6 | 3.4 | 3.8 | 3.4 | 3.8 | 2.6 | 2.6 | 2.6 | 2.6 | 2.6 |
| La₂O₃ | 18.4 | 18.4 | 18.4 | 17.0 | 17.2 | 18.4 | 17.7 | 17.8 | 18.4 | 18.2 |
| ZrO₂ | 6.9 | 6.9 | 6.9 | 6.9 | 6.9 | 6.9 | 6.9 | 6.9 | 8.4 | 7.2 |
| Bi₂O₃ | | | | | | | | | | |
| ZnO | | | | | | | | | | |
| Gd₂O₃ | 3.4 | 3.4 | 3.4 | 3.4 | 3.4 | 3.3 | 3.3 | 4.0 | 3.4 | 3.3 |
| Sum | 100 | 100 | 100 | 100 | 100 | 100 | 100 | 100 | 100 | 100 |
| SiO₂+Bi₂O₃ | 30.1 | 32.1 | 32.1 | 32.1 | 32.1 | 32.1 | 32.1 | 32.1 | 32.1 | 32.1 |
| TiO₂+Ta₂O₅+WO₃+Nb₂O₅+ ZrO₂+Ln₂O₃ | 67.9 | 67.9 | 67.9 | 67.9 | 67.9 | 67.9 | 67.9 | 67.9 | 67.9 | 67.9 |
| BaO/(MgO+CaO+SrO+BaO) | 0.0 | - | - | - | - | - | - | - | - | - |
| SiO₂/B₂O₃ | 0.5 | 0.5 | 0.5 | 0.5 | 0.5 | 0.5 | 0.5 | 0.5 | 0.5 | 0.5 |
| Li₂O+Na₂O+K₂O | 0.0 | 0.0 | 0.0 | 0.0 | 0.0 | 0.0 | 0.0 | 0.0 | 0.0 | 0.0 |
| Li₂O+Na₂O | 0.0 | 0.0 | 0.0 | 0.0 | 0.0 | 0.0 | 0.0 | 0.0 | 0.0 | 0.0 |
| MgO+CaO+SrO | 2.0 | 0.0 | 0.0 | 0.0 | 0.0 | 0.0 | 0.0 | 0.0 | 0.0 | 0.0 |
| Li₂O+Na₂O+K₂O+MgO+CaO+ SrO+BaO | 2.0 | 0.0 | 0.0 | 0.0 | 0.0 | 0.0 | 0.0 | 0.0 | 0.0 | 0.0 |
| TiO₂/B₂O₃ | 1.7 | 1.5 | 1.5 | 1.6 | 1.6 | 1.5 | 1.6 | 1.6 | 1.5 | 1.6 |
| TiO₂+WO₃+Nb₂O₅ | 35.8 | 35.2 | 35.8 | 36.6 | 37.0 | 34.9 | 35.8 | 35.8 | 34.3 | 35.5 |
| (ZrO₂+Ta₂O₅+Nb₂O₅)/(SiO₂+B₂O₃) | 0.3 | 0.3 | 0.3 | 0.3 | 0.3 | 0.3 | 0.3 | 0.3 | 0.3 | 0.3 |
| (Nb₂O₅+TiO₂+WO₃+Ta₂O₅)/ (La₂O₃+Gd₂O₃+Y₂O₃+Yb₂O₃) | 1.4 | 1.4 | 1.4 | 1.5 | 1.5 | 1.3 | 1.4 | 1.4 | 1.4 | 1.4 |
| MgO+CaO+SrO+BaO | 2.00 | 0.00 | 0.00 | 0.00 | 0.00 | 0.00 | 0.00 | 0.00 | 0.00 | 0.00 |
| Refractive index (nd) | 2.02 | 2.01 | 2.01 | 2.01 | 2.01 | 2.01 | 2.01 | 2.01 | 2.01 | 2.01 |
| Density (d) [g/cm³] | 5.0 | 4.9 | 4.9 | 4.9 | 4.9 | 4.9 | 4.9 | 4.9 | 4.9 | 4.9 |
| Devitrification temperature [°C] | 1200 | 1200 | 1200 | 1200 | 1200 | 1150 | 1150 | 1150 | 1200 | 1140 |
| Temperature T1 [°C] | 1105 | 1105 | 1107 | 1096 | 1098 | 1110 | 1105 | 1105 | 1102 | 1101 |
| Devitrification viscosity | 0.4 | 0.5 | 0.5 | 0.4 | 0.4 | 0.7 | 0.6 | 0.8 | 0.4 | 0.7 |
| Light transmittance (T360) [%] | | | | | | | | | | |
| Glass transition point (Tg) [°C] | 723 | 717 | 717 | 716 | 715 | 716 | 714 | 715 | 716 | 714 |
| Young's modulus (E) [Gpa] | | | | | | | | | | |
| Abbe number (vd) | 27 | 28 | 27 | 27 | 27 | 28 | 27 | 27 | 28 | 27 |
| Coefficient of thermal expansion α (50-350°C)[×10⁻7/K] | 96 | 93 | 93 | 91 | 91 | 93 | 92 | 94 | 94 | 93 |

**Table 5**

| | Example 41 | Example 42 | Example 43 | Example 44 | Example 45 | Example 46 | Example 47 | Example 48 | Example 49 | Example 50 |
|---|---|---|---|---|---|---|---|---|---|---|
| P₂O₅ | | | | | | | | | | |
| SiO₂ | 11.2 | 12.2 | 12.2 | 14.0 | 14.0 | 14.0 | 14.0 | 14.0 | 14.0 | 14.0 |
| B₂O₃ | 21.2 | 20.9 | 20.9 | 22.0 | 22.0 | 22.0 | 22.0 | 22.0 | 22.0 | 22.0 |
| MgO | | | | | | | | | | |
| CaO | | | | 11.0 | 11.0 | 11.0 | 11.0 | 11.5 | 14.5 | 12.5 |
| SrO | | | | 11.0 | 11.0 | 11.0 | 11.0 | 11.0 | 8.7 | 9.0 |
| BaO | | | | 8.0 | 8.0 | 8.0 | 8.0 | 8.7 | 8.0 | 10.0 |
| Li₂O | | | | 2.0 | 2.0 | 2.0 | 2.0 | 2.0 | 2.0 | 2.0 |
| Na₂O | | | | | | | | | | |
| K₂O | | | | | | | | | | |
| Al₂O₃ | | | | | | | | | | |
| Y₂O₃ | 3.7 | 3.7 | 3.3 | | | | | | | |
| TiO₂ | 32.9 | 32.6 | 32.6 | 15.0 | 18.0 | 21.0 | 15.0 | 20.0 | 20.0 | 21.0 |
| Ta₂O₅ | | | | | | | | | | |
| WO₃ | | | | | | | | | | |
| Nb₂O₅ | 2.6 | 2.6 | 2.6 | 6.0 | 3.0 | 3.0 | 3.0 | 2.8 | 2.8 | 2.7 |
| La₂O₃ | 18.2 | 18.2 | 18.2 | 8.0 | 8.0 | 5.0 | 8.0 | 5.0 | 5.0 | 3.6 |
| ZrO₂ | 6.9 | 6.5 | 6.9 | 3.0 | 3.0 | 3.0 | 6.0 | 3.0 | 3.0 | 3.2 |
| Bi₂O₃ | | | | | | | | | | |
| ZnO | | | | | | | | | | |
| Gd₂O₃ | 3.3 | 3.3 | 3.3 | | | | | | | |
| Sum | 100 | 100 | 100 | 100 | 100 | 100 | 100 | 100 | 100 | 100 |
| SiO₂+Bi₂O₃ | 32.4 | 33.1 | 33.1 | 36.0 | 36.0 | 36.0 | 36.0 | 36.0 | 36.0 | 36.0 |
| TiO₂+Ta₂O₅+WO₃+Nb₂O₅+ ZrO₂+Ln₂O₃ | 67.6 | 66.9 | 66.9 | 32.0 | 32.0 | 32.0 | 32.0 | 30.8 | 30.8 | 30.5 |
| BaO/(MgO+CaO+SiO+BaO) | - | - | - | 0.3 | 0.3 | 0.3 | 0.3 | 0.3 | 0.3 | 0.3 |
| SiO₂/B₂O₃ | 0.5 | 0.6 | 0.6 | 0.6 | 0.6 | 0.6 | 0.6 | 0.6 | 0.6 | 0.6 |
| Li₂O+Na₂O+K₂O | 0.0 | 0.0 | 0.0 | 2.0 | 2.0 | 2.0 | 2.0 | 2.0 | 2.0 | 2.0 |
| Li₂O+Na₂O | 0.0 | 0.0 | 0.0 | 2.0 | 2.0 | 2.0 | 2.0 | 2.0 | 2.0 | 2.0 |
| MgO+CaO+SrO | 0.0 | 0.0 | 0.0 | 22.0 | 22.0 | 22.0 | 22.0 | 22.5 | 23.2 | 21.5 |
| Li₂O+Na₂O+K₂O+MgO+CaO+ SrO+BaO | 0.0 | 0.0 | 0.0 | 32.0 | 32.0 | 32.0 | 32.0 | 33.2 | 33.2 | 33.5 |
| TiO₂/B₂O₃ | 1.6 | 1.6 | 1.6 | 0.7 | 0.8 | 1.0 | 0.7 | 0.9 | 0.9 | 1.0 |
| TiO₂+WO₃+Nb₂O₅ | 35.5 | 35.2 | 35.2 | 21.0 | 21.0 | 24.0 | 18.0 | 22.8 | 22.8 | 23.7 |
| (ZrO₂+Ta₂O₅+Nb₂O₅)(SiO₂+B₂O₃) | 0.3 | 0.3 | 0.3 | 0.3 | 0.2 | 0.2 | 0.3 | 0.2 | 0.2 | 0.2 |
| (Nb₂O₅+TiO₂+WO₃+Ta₂O₅)/ (La₂O₃+Gd₂O₃+Y₂O₃+Yb₂O₃) | 1.4 | 1.4 | 1.4 | 2.6 | 2.6 | 4.8 | 2.3 | 4.6 | 4.6 | 6.6 |
| MgO+CaO+SrO+BaO | 0.00 | 0.00 | 0.00 | 30.00 | 30.00 | 30.00 | 30.00 | 31.20 | 31.20 | 31.50 |
| Refractive index (nd) | 2.01 | 2.00 | 2.00 | 1.87 | 1.86 | 1.86 | 1.85 | 1.85 | 1.85 | 1.85 |
| Density (d) [g/cm³] | 4.9 | 4.9 | 4.9 | 4.2 | 4.2 | 4.0 | 4.2 | 4.0 | 4.0 | 4.0 |
| Devitrification temperature [°C] | 1140 | 1140 | 1140 | 1100 | 1125 | 1050 | 1100 | 1075 | 1050 | 1025 |
| Temperature T1 [°C] | 1104 | 1106 | 1098 | 1020 | 1020 | 1006 | 1043 | 1010 | 1008 | 1011 |
| Devitrification viscosity | 0.8 | 0.8 | 0.7 | 0.5 | 0.4 | 0.7 | 0.6 | 0.5 | 0.7 | 1.1 |
| Light transmittance (T360) [%] | | | | | | | | | | |
| Glass transition point (Tg) [°C] | 713 | 713 | 713 | 628 | 619 | 615 | 625 | 612 | 613 | 609 |
| Young's modulus (E) [Gpa] | | | | | | | | | | |
| Abbe number (vd) | 27 | 28 | 28 | 31.4 | 32.0 | 30.0 | 33.2 | 30.7 | 30.7 | 30.2 |
| Coefficient of thermal expansion α (50-350°C)[×10⁻⁷ /K] | 93 | 93 | 93 | 92 | 94 | 89 | 94 | 90 | 90 | 89 |

**Table 6**

| | Example 51 | Example 52 | Example 53 | Example 54 | Example 55 | Example 56 | Example 57 | Example 58 | Example 59 | Example 60 |
|---|---|---|---|---|---|---|---|---|---|---|
| P₂O₅ | | | | | | | | | | |
| SiO₂ | 15.0 | 14.0 | 15.0 | 15.0 | 15.0 | 15.0 | 15.8 | 15.8 | 12.8 | 12.8 |
| B₂O₃ | 26.0 | 22.0 | 25.0 | 24.0 | 25.0 | 25.0 | 21.0 | 21.0 | 24.7 | 21.7 |
| MeO | | | | | | | | | | |
| CaO | 10.5 | 12.0 | 10.5 | 10.5 | 10.4 | 11.4 | 3.0 | | | 3.0 |
| SrO | 7.0 | 7.0 | 7.0 | 7.0 | 6.8 | 7.8 | | | | |
| BaO | 8.0 | 12.0 | 8.0 | 8.0 | 7.9 | 7.9 | | | | |
| Li₂O | 2.0 | 2.0 | 2.0 | 2.0 | 2.0 | | | 3.0 | | |
| Na₂O | | | | | | | | | | |
| k₂O | | | | | | | | | | |
| Al₂O₃ | | | | | | | | | | |
| Y₂O₃ | | | | 3.0 | | | 3.5 | 3.5 | 3.5 | 3.5 |
| TiO₂ | 22.0 | 21.5 | 20.5 | 21.0 | 20.9 | 20.9 | 25.0 | 25.0 | 25.0 | 25.0 |
| Ta₂O₅ | | | | | | | | | | |
| WO₃ | | | | | | | 0.2 | 0.2 | 0.2 | 0.2 |
| Nb₂O₅ | 2.7 | 2.7 | 2.7 | 2.7 | 2.7 | 2.7 | 4.0 | 4.0 | 4.3 | 4.3 |
| La₂O₃ | 3.6 | 3.6 | 5.1 | 3.6 | 5.1 | 5.1 | 20.5 | 20.5 | 22.5 | 22.5 |
| ZrO₂ | 3.2 | 3.2 | 4.2 | 3.2 | 4.2 | 4.2 | 7.0 | 7.0 | 7.0 | 7.0 |
| Bi₂O₃ | | | | | | | | | | |
| ZnO | | | | | | | | | | |
| Gd₂O₃ | | | | | | | | | | |
| Sum | 100 | 100 | 100 | 100 | 100 | 100 | 100 | 100 | 100 | 100 |
| SiO₂+Bi₂O₃ | 41.0 | 36.0 | 40.0 | 39.0 | 40.0 | 40.0 | 36.8 | 36.8 | 37.5 | 34.5 |
| TiO₂+Ta₂O₅+WO₃+Nb₂O₅+ ZrO₂+Ln₂O₃ | 31.5 | 31.0 | 32.5 | 33.5 | 32.9 | 32.9 | 60.2 | 60.2 | 62.5 | 62.5 |
| BaO/(MgO+CaO+SrO+BaO) | 0.3 | 0.4 | 0.3 | 0.3 | 0.3 | 0.3 | 0.0 | - | - | 0.0 |
| SiO₂/B₂O₃ | 0.6 | 0.6 | 0.6 | 0.6 | 0.6 | 0.6 | 0.8 | 0.8 | 0.5 | 0.6 |
| Li₂O+Na₂O+K₂O | 2.0 | 2.0 | 2.0 | 2.0 | 2.0 | 0.0 | 0.0 | 3.0 | 0.0 | 0.0 |
| Li₂O+Na₂O | 2.0 | 2.0 | 2.0 | 2.0 | 2.0 | 0.0 | 0.0 | 3.0 | 0.0 | 0.0 |
| MgO+CaO+SrO | 17.5 | 19.0 | 17.5 | 17.5 | 17.2 | 19.2 | 3.0 | 0.0 | 0.0 | 3.0 |
| Li₂O+Na₂O+K₂O+MgO+CaO+ SrO+BaO | 27.5 | 33.0 | 27.5 | 27.5 | 27.1 | 27.1 | 3.0 | 3.0 | 0.0 | 3.0 |
| TiO₂/B₂O₃ | 0.8 | 1.0 | 0.8 | 0.9 | 0.8 | 0.8 | 1.2 | 1.2 | 1.0 | 1.2 |
| TiO₂+WO₃+Nb₂O₅ | 24.7 | 24.2 | 23.2 | 23.7 | 23.6 | 23.6 | 29.2 | 29.2 | 29.5 | 29.5 |
| (ZrO₂+Ta₂O₅+Nb₂O₅)/(SiO₂+B₂O₃) | 0.1 | 0.2 | 0.2 | 0.2 | 0.2 | 0.2 | 0.3 | 0.3 | 0.3 | 0.3 |
| (Nb₂O₅+TiO₂+WO₃+Ta₂O₅)/ (La₂O₃+Gd₂O₃+Y₂O₃+Yb₂O₃) | 6.9 | 6.7 | 4.5 | 3.6 | 4.6 | 4.6 | 1.2 | 1.2 | 1.1 | 1.1 |
| MeO+CaO+SrO+BaO | 25.50 | 31.00 | 25.50 | 25.50 | 25.10 | 27.10 | 3.00 | 0.00 | 0.00 | 3.00 |
| Refractive index (nd) | 1.85 | 1.85 | 1.85 | 1.85 | 1.85 | 1.85 | 1.97 | 1.97 | 1.98 | 1.98 |
| Density (d) [g/cm³] | 3.8 | 4.0 | 3.9 | 3.9 | 3.9 | 4.0 | 4.8 | 4.8 | 4.8 | 4.9 |
| Devitrification temperature [°C] | 1050 | 1000 | 988 | 1025 | 1025 | 1012 | 1150 | 1150 | 1125 | 1137 |
| Temperature T1 [°C] | 995 | 999 | 1022 | 1010 | 1009 | 1015 | 1102 | 1082 | 1099 | 1101 |
| Devitrification viscosity | 0.6 | 1.1 | 1.3 | 1.1 | 1.1 | 1.1 | 0.7 | 0.6 | 0.8 | 0.7 |
| Light transmittance (T360) [%] | | | | | | | | | | |
| Glass transition point (Tg) [°C] | 613 | 607 | 618 | 624 | 619 | 633 | 717 | 696 | 717 | 717 |
| Young's modulus (E) [Gpa] | | | | | | | | | | |
| Abbe number (vd) | 29.4 | 29.8 | 30.6 | 30.5 | 30.3 | 30.2 | 28 | 28 | 30 | 29 |
| Coefficient of thermal expansion α (50-350°C)[×10⁻⁷/K] | 82 | 89 | 85 | 81 | 85 | 83 | 89 | 93 | 91 | 93 |

**Table 7**

| | Example 61 | Example 62 | Example 63 | Example 64 | Example 65 | Example 66 | Example 67 | Example 68 | Example 69 | Example 70 |
|---|---|---|---|---|---|---|---|---|---|---|
| P₂O₅ | | | | | | | | | | |
| SiO₂ | 15.8 | 12.8 | 14.8 | 14.6 | 14.6 | 13.6 | 14.6 | 18.6 | 10.6 | 10.0 |
| B₂O₃ | 21.0 | 24.7 | 21.0 | 24.5 | 25.0 | 23.8 | 24.5 | 20.5 | 28.5 | 23.1 |
| MgO | | | | | | | | | | |
| CaO | 4.0 | | 5.0 | | | 3.0 | | | | |
| SrO | | | | | | | | | | |
| BaO | | | | | | | | | | |
| Li₂O | | | | | | | | | | |
| Na₂O | | | | | | | | | | |
| K₂O | | | | | | | | | | |
| Al₂O₃ | | | | | | | | | | |
| Y₂O₃ | 4.0 | 5.2 | 4.0 | 4.0 | 3.5 | 3.0 | 4.0 | 4.0 | 4.0 | 3.3 |
| TiO₂ | 25.0 | 24.0 | 25.0 | 24.0 | 24.0 | 24.0 | 24.1 | 24.0 | 24.0 | 32.4 |
| Ta₂O₅ | | | | | | | | | | |
| WO₃ | 0.2 | 0.2 | 0.2 | 0.2 | 0.2 | 0.2 | | 0.2 | 0.2 | 0.3 |
| Nb₂O₅ | 4.0 | 3.6 | 4.0 | 4.0 | 4.0 | 4.0 | 4.0 | 4.0 | 4.0 | 2.6 |
| La₂O₃ | 21.0 | 23.0 | 18.0 | 22.7 | 22.4 | 22.3 | 22.8 | 22.7 | 22.7 | 18.2 |
| ZrO₂ | 5.0 | 6.5 | 6.0 | 6.0 | 6.3 | 6.1 | 6.0 | 6.0 | 6.0 | 6.9 |
| Bi₂O₃ | | | | | | | | | | |
| ZnO | | | | | | | | | | |
| Gd₂O₃ | | | 2.0 | | | | | | | 3.3 |
| Sum | 100 | 100 | 100 | 100 | 100 | 100 | 100 | 100 | 100 | 100 |
| SiO₂+Bi₂O₃ | 36.8 | 37.5 | 35.8 | 39.1 | 39.6 | 37.4 | 39.1 | 39.1 | 39.1 | 33.1 |
| TiO₂+Ta₂O₅+WO₃+Nb₂O₅+ ZrO₂+Ln₂O₃ | 59.2 | 62.5 | 59.2 | 60.9 | 60.4 | 59.6 | 60.9 | 60.9 | 60.9 | 66.9 |
| BaO/(MeO+CaO+SrO+BaO) | 0.0 | - | 0.0 | - | - | 0.0 | - | - | - | - |
| SiO₂/B₂O₃ | 0.8 | 0.5 | 0.7 | 0.6 | 0.6 | 0.6 | 0.6 | 0.9 | 0.4 | 0.4 |
| Li₂O+Na₂O+K₂O | 0.0 | 0.0 | 0.0 | 0.0 | 0.0 | 0.0 | 0.0 | 0.0 | 0.0 | 0.0 |
| Li₂O+Na₂O | 0.0 | 0.0 | 0.0 | 0.0 | 0.0 | 0.0 | 0.0 | 0.0 | 0.0 | 0.0 |
| MgO+CaO+SrO | 4.0 | 0.0 | 5.0 | 0.0 | 0.0 | 3.0 | 0.0 | 0.0 | 0.0 | 0.0 |
| Li₂O+Na₂O+K₂O+MgO+CaO+ SrO+BaO | 4.0 | 0.0 | 5.0 | 0.0 | 0.0 | 3.0 | 0.0 | 0.0 | 0.0 | 0.0 |
| TiO₂/B₂O₃ | 1.2 | 1.0 | 1.2 | 1.0 | 1.0 | 1.0 | 1.0 | 1.2 | 0.8 | 1.4 |
| TiO₂+WO₃+Nb₂O₅ | 29.2 | 27.8 | 29.2 | 28.2 | 28.2 | 28.2 | 28.1 | 28.2 | 28.2 | 35.2 |
| (ZrO₂+Ta₂O₅+Nb₂O₅)/(SiO₂+B₂O₃) | 0.2 | 0.3 | 0.3 | 0.3 | 0.3 | 0.3 | 0.3 | 0.3 | 0.3 | 0.3 |
| (Nb₂O₅+TiO₂+WO₃+Ta₂O₅)/ (La₂O₃+Gd₂O₃+Y₂O₃+Yb₂O₃) | 1.2 | 1.0 | 1.2 | 1.1 | 1.1 | 1.1 | 1.0 | 1.1 | 1.1 | 1.4 |
| MgO+CaO+SrO+BaO | 4.00 | 0.00 | 5.00 | 0.00 | 0.00 | 3.00 | 0.00 | 0.00 | 0.00 | 0.00 |
| Refractive index (nd) | 1.98 | 1.98 | 1.97 | 1.96 | 1.96 | 1.96 | 1.96 | 1.97 | 1.96 | 2.00 |
| Density (d) [g/cm³] | 4.8 | 5.0 | 4.9 | 4.8 | 4.8 | 4.8 | 4.8 | 4.8 | 4.8 | 4.9 |
| Devitrification temperature [°C] | 1137 | 1175 | 1137 | 1113 | 1113 | 1125 | 1125 | 1125 | 1125 | 1125 |
| Temperature T1 [°C] | 1115 | 1100 | 1106 | 1088 | 1079 | 1091 | 1094 | 1117 | 1070 | 1092 |
| Devitrification viscosity | 0.9 | 0.5 | 0.8 | 0.8 | 0.8 | 0.8 | 0.8 | 0.9 | 0.7 | 0.8 |
| Light transmittance (T360) [%] | | | | | | | | | | |
| Glass transition point (Tg) [°C] | 714 | 719 | 718 | 717 | 715 | 710 | 717 | 725 | 708 | 719 |
| Young's modulus (E) [Gpa] | | | | | | | | | | |
| Abbe number (vd) | 34 | 31 | 29 | 30 | 30 | 30 | 30 | 30 | 30 | 28 |
| Coefficient of thermal expansion α (50-350°C)[×10⁻⁷/K] | 90 | 91 | 89 | 90 | 90 | 92 | 91 | 90 | 90 | 92 |

**Table 8**

| | Example 71 | Example 72 | Example 73 | Example 74 | Example 75 | Example 76 | Example 77 | Example 78 | Example 79 | Example 80 |
|---|---|---|---|---|---|---|---|---|---|---|
| P₂O₅ | | | | | | | | | | |
| SiO₂ | 9.0 | 10.0 | 10.0 | 9.0 | 11.8 | 11.8 | 11.8 | 11.8 | 9.0 | 11.8 |
| B₂O₃ | 23.0 | 23.1 | 23.1 | 23.1 | 19.8 | 19.8 | 19.8 | 19.8 | 22.6 | 19.8 |
| MgO | | | | | | | | | | |
| CaO | | | | | | | | | | |
| SrO | | | | | | | | | | |
| BaO | | | | | | | | | | |
| Li₂O | | | | | | | | | | |
| Na₂O | | | | | | | | | | |
| K₂O | | | | | | | | | | |
| Al₂O₃ | | | | | | | | | | |
| Y₂O₃ | 4.0 | 3.3 | 3.4 | 4.6 | 4.8 | 4.5 | 4.4 | 4.8 | 4.5 | 4.8 |
| TiO₂ | 30.9 | 32.1 | 31.5 | 29.5 | 24.0 | 24.0 | 24.0 | 24.0 | 24.0 | 24.0 |
| Ta₂O₅ | | | | | | | | 1.5 | | |
| WO₃ | 0.3 | 0.3 | 0.3 | 0.3 | 0.2 | 3.0 | 4.5 | 1.7 | 3.0 | 0.2 |
| Nb₂O₅ | 2.6 | 2.8 | 3.1 | 3.5 | 4.8 | 4.5 | 3.5 | 4.0 | 4.5 | 4.8 |
| La₂O₃ | 23.4 | 18.9 | 18.9 | 19.1 | 27.3 | 25.6 | 22.3 | 25.1 | 25.6 | 27.3 |
| ZrO₂ | 6.9 | 6.3 | 6.3 | 6.6 | 7.2 | 6.8 | 6.6 | 7.2 | 6.8 | 7.2 |
| Bi₂O₃ | | | | | | | | | | |
| ZnO | | | | | | | | | | |
| Gd₂O₃ | | 3.3 | 3.5 | 4.4 | | | 3.0 | | | |
| Sum | 100 | 100 | 100 | 100 | 100 | 100 | 100 | 100 | 100 | 100 |
| SiO₂+Bi₂O₃ | 32.0 | 33.1 | 33.1 | 32.1 | 31.6 | 31.6 | 31.6 | 31.6 | 31.6 | 31.6 |
| TiO₂+Ta₂O₅+WO₃+Nb₂O₅+ ZrO₂+Ln₂O₃ | 68.0 | 66.9 | 66.9 | 67.9 | 68.4 | 68.4 | 68.4 | 68.4 | 68.4 | 68.4 |
| BaO/(MgO+CaO+SrO+BaO) | - | - | - | - | - | - | - | - | - | - |
| SiO₂/B₂O₃ | 0.4 | 0.4 | 0.4 | 0.4 | 0.6 | 0.6 | 0.6 | 0.6 | 0.4 | 0.6 |
| Li₂O+Na₂O+K₂O | 0.0 | 0.0 | 0.0 | 0.0 | 0.0 | 0.0 | 0.0 | 0.0 | 0.0 | 0.0 |
| Li₂O+Na₂O | 0.0 | 0.0 | 0.0 | 0.0 | 0.0 | 0.0 | 0.0 | 0.0 | 0.0 | 0.0 |
| MeO+CaO+SrO | 0.0 | 0.0 | 0.0 | 0.0 | 0.0 | 0.0 | 0.0 | 0.0 | 0.0 | 0.0 |
| Li₂O+Na₂O+K₂O+MgO+CaO+ SrO+BaO | 0.0 | 0.0 | 0.0 | 0.0 | 0.0 | 0.0 | 0.0 | 0.0 | 0.0 | 0.0 |
| TiO₂/B₂O₃ | 1.3 | 1.4 | 1.4 | 1.3 | 1.2 | 1.2 | 1.2 | 1.2 | 1.1 | 1.2 |
| TiO₂+WO₃+Nb₂O₅ | 33.7 | 35.1 | 34.8 | 33.3 | 29.0 | 31.5 | 32.0 | 29.7 | 31.5 | 29.0 |
| (ZrO₂+Ta₂O₅+Nb₂O₅)/(SiO₂+B₂O₃) | 0.3 | 0.3 | 0.3 | 0.3 | 0.4 | 0.4 | 0.3 | 0.4 | 0.4 | 0.4 |
| (Nb₂O₅+TiO₂+WO₃+Ta₂O₅)/ (La₂O₃+Gd₂O₃+Y₂O₃+Yb₂O₃) | 1.2 | 1.4 | 1.3 | 1.2 | 0.9 | 1.0 | 1.1 | 1.0 | 1.0 | 0.9 |
| MgO+CaO+SrO+BaO | 0.00 | 0.00 | 0.00 | 0.00 | 0.00 | 0.00 | 0.00 | 0.00 | 0.00 | 0.00 |
| Refractive index (nd) | 2.00 | 2.00 | 2.00 | 2.00 | 2.00 | 2.00 | 2.00 | 2.00 | 2.00 | 2.00 |
| Density (d) [g/cm³] | 5.0 | 5.0 | 5.0 | 5.2 | 5.1 | 5.1 | 5.2 | 5.1 | 5.1 | 5.1 |
| Devitrification temperature [°C] | 1200 | 1100 | 1113 | 1175 | 1238 | 1225 | 1225 | 1225 | 1225 | 1225 |
| Temperature T1 [°C] Temperature T1 [°C] | 1097 | 1103 | 1098 | 1104 | 1152 | 1131 | 1138 | 1133 | 1117 | 1143 |
| Devitrification viscosity | 0.5 | 1.0 | 0.9 | 0.6 | 0.5 | 0.4 | 0.4 | 0.4 | **0.4** | 0.4 |
| Light transmittance (T360) [%] | | | | | | | | | | |
| Glass transition point (Tg) [°C] | 714 | 719 | 721 | 729 | 735 | 727 | 729 | 730 | 721 | 735 |
| Young's modulus (E) [Gpa] | | | | | | | | | | |
| Abbe number (vd) | 28 | 28 | 28 | 29 | 30 | 29 | 29 | 30 | 30 | 30 |
| Coefficient of thermal expansion α (50-350°C)[×10⁻⁷ /K] | 96 | 93 | 93 | 94 | 100 | 88 | 83 | 92 | 88 | 100 |

**Table 9**

| | Example 81 | Example 82 | Example 83 | Example 84 | Example 85 |
|---|---|---|---|---|---|
| P₂O₅ | | | | | 23.0 |
| SiO₂ | 58.6 | 60.6 | 52.6 | 34.6 | 0.9 |
| B₂O₃ | 8.7 | | | | 3.0 |
| MgO | | | 6.3 | | |
| CaO | 5.0 | | 8.8 | 1.8 | |
| SrO | | | 4.0 | | |
| BaO | | | 14.8 | | 1.8 |
| Li₂O | 2.2 | 20.2 | | 26.2 | 8.2 |
| Na₂O | | 5.3 | | 5.4 | 6.8 |
| K₂O | 9.9 | 1.1 | | 1.1 | 2.1 |
| Al₂O₃ | | | 1.2 | | |
| Y₂O₃ | | | | 0.3 | |
| TiO₂ | | 6.4 | 7.1 | 5.0 | 7.1 |
| Ta₂O₅ | | | | | |
| WO₃ | | | | | 8.3 |
| Nb₂O₅ | 12.7 | 6.4 | 2.0 | 20.9 | 17.3 |
| La₂O₃ | | | 1.0 | | |
| ZrO₂ | 0.8 | | 2.2 | 2.4 | |
| Bi₂O₃ | | | | | 21.5 |
| ZnO | 1.0 | | | 2.4 | |
| Gd₂O₃ | 1.0 | | | | |
| Sum | 100 | 100 | 100 | 100 | 100 |
| SiO₂+Bi₂O₃ | 67.3 | 60.6 | 52.6 | 34.6 | 3.9 |
| TiO₂+Ta₂O₅+WO₃+Nb₂O₅+ ZrO₂+Ln₂O₃ | 14.5 | 12.8 | 12.3 | 28.5 | 32.6 |
| BaO/(MpO+CaO+SrO+BaO) | 0.0 | - | 0.4 | 0.0 | 1.0 |
| SiO₂/B₂O₃ | 6.7 | - | - | - | 0.3 |
| Li₂O+Na₂O+K₂O | 12.1 | 26.6 | 0.0 | 32.7 | 17.1 |
| Li₂O+Na₂O | 2.2 | 25.5 | 0.0 | 31.6 | 15.0 |
| MgO+CaO+SrO | 5.0 | 0.0 | 19.1 | 1.8 | 0.0 |
| Li₂O+Na₂O+K₂O+MgO+CaO+ SrO+BaO | 17.1 | 26.6 | 33.9 | 34.4 | 18.9 |
| TiO₂/B₂O₃ | 0.0 | - | - | - | 2.3 |
| TiO₂+WO₃+Nb₂O₅ | 12.7 | 12.8 | 9.1 | 25.8 | 32.6 |
| (ZrO₂+Ta₂O₅+Nb₂O₅)/(SiO₂+B₂ O₃) | 0.2 | 0.1 | 0.1 | 0.7 | 4.5 |
| (Nb₂O₅+TiO₂+WO₃+Ta₂O₅)/ | (La₂O₃+Gd₂O₃+Y₂O₃+Yb₂O₃) 12.3 | - | 9.1 | 98.1 | - |
| MgO+CaO+SrO+BaO | | | | | |
| Refractive index (nd) | 1.74 | 1.67 | 1.70 | 1.89 | 2.00 |
| Density (d) [g/cm³] | 3.2 | 2.86 | 3.66 | 3.62 | 5.10 |
| Devitrification temperature [°C] | 1300< | | 1070 | 1400< | |
| Temperature T1 [°C] | | 1086 | 1210 | | |
| Devitrification viscosity | | | | | |
| Light transmittance (T360) [%] | | | 64 | | |
| Glass transition point (Tg) [°C] | 657 | | | | 483 |
| Young's modulus (E) [Gpa] | | 96 | | 115 | 87 |
| Abbe number (vd) | | | | 24 | 19 |
| Coefficient of thermal expansion α (50-350°C)[×10⁻⁷/K] | 66 | | | | 101 |

The optical glasses of the examples (Examples 1 to 80) each have a refractive index (n_{d}) as high as 1.81 or more and a density as low as 6.0 g/cm³ or less. These optical glasses each have a temperature T₁, which is the temperature at which the glass viscosity is 10¹ dPa·s, of 900°C to 1,200°C and hence have satisfactory producibility. Furthermore, these optical glasses each have a devitrification temperature of 1,300°C or lower and hence have satisfactory producibility. Consequently, these optical glasses are suitable for use in wearable appliances, in-vehicle cameras, and visual sensing for robots.

Meanwhile, the glasses of Examples 81 and 84, which are comparative examples, each have a devitrification temperature of higher than 1,300°C and hence have poor producibility. The glasses of Examples 81, 82, and 83 each have a refractive index (nd) of lower than 1.81. The glass of Example 85 has an Si content of less than 5 mol%.

The optical glasses obtained from glasses obtained by melting the glass compositions of the examples (Examples 1 to 80) each have a temperature T₁ of 900°C to 1,200°C and hence have satisfactory producibility and contain a small number of residual bubbles, and the size of the bubbles is small. Glass plates free from defects such as bubbles, foreign matter, striae, and phase separation are hence obtained. Consequently, in the case where samples having the sizes shown above are formed, it is possible to obtain optical glasses having an LTV for an area of 25 cm² of 2 µm or less, a warpage (for disk-shaped glass plate with a diameter of 6 inches) of 30 µm or less, and an Ra of 2 nm or less. Furthermore, it is thought that since these optical glasses have devitrification temperatures of 1,300°C or lower and are inhibited from being devitrified, it is possible to attain an LTV for an area of 25 cm² of 1.5 µm or less, a warpage (for disk-shaped glass plate with a diameter of 6 inches) of 18 µm or less, and an Ra of 1 nm or less.

Three defect-free glass plates of the examples were precisely polished and, as a result, the polished glass plates had LTV values for an area of 25 cm² of 1.0 µm, 1.2 µm, and 1.2 µm, warpage values of 45, 32, and 38, and Ra values of 0.198, 0.284, and 0.266. Consequently, an optical glass having an LTV for an area of 25 cm² of 2 µm or less, a warpage of 50 µm or less, and an Ra of 2 nm or less can be obtained by precisely polishing the defect-free glass plates of the examples of the present invention.

In the case where a glass of the present invention is chemically strengthened, a chemical strengthening treatment may be performed, for example, by immersing the glass for 30 minutes in a melt obtained by melting sodium nitrate by heating at 400°C. Thus, a strengthened glass can be obtained.

As described above, the optical glass of the present invention has a high refractive index, a low density, and satisfactory producibility and is suitable for use as an optical glass for wearable appliances and for mounting on vehicles or robots, etc. Optical components obtained by coating the optical glasses of the examples of the present invention with an antireflection film constituted of a multilayered dielectric film composed of 4 to 10 layers formed by alternately depositing a low-refractive index film of, for example, SiO₂, and a high-refractive index film of, for example, TiO₂ are also suitable for use in wearable appliances and for mounting on vehicles and robots.

While the invention has been described in detail and with reference to specific embodiments thereof, it will be apparent to one skilled in the art that various changes and modifications can be made therein without departing from the spirit and scope thereof. This application is based on Japanese patent application No. 2018-163582 filed on August 31, 2018 and Japanese patent application No. 2018-218577 filed on November 21, 2018, the contents thereof being incorporated herein by reference.

## Claims

1. An optical glass, having:
a refractive index (n_{d}) of 1.81 to 2.15;
a density (d) of 6.0 g/cm³ or less;
a temperature T₁, at which a viscosity of the glass is 10¹ dPa·s, of 900°C to 1,200°C;
a devitrification temperature of 1,300°C or lower; and
a content of SiO₂ of 5% to 44% in mol% based on oxides.

2. The optical glass according to claim 1, having a glass transition point (Tg) of 600°C or higher.

3. The optical glass according to claim 1 or 2, comprising, in mol% based on oxides, at least one oxide selected from the group consisting of TiO₂, Ta₂O₅, WO₃, Nb₂O₅, ZrO₂, and Ln₂O₃ (Ln is at least one element selected from the group consisting of Y, La, Gd, Yb, and Lu) in an amount of 30% to 80%,
wherein a total content of SiO₂ and B₂O₃ is 20% to 70% in mol% based on oxides, and
wherein in a case where the glass comprises one or more alkaline-earth metal components (MgO, CaO, SrO, and BaO), a proportion of BaO in the alkaline-earth metal components is 0.5 or less.

4. The optical glass according to any one of claims 1 to 3, having a viscosity at the devitrification temperature (devitrification viscosity) satisfying log η=0.4 or higher.

5. The optical glass according to any one of claims 1 to 4, having a Young's modulus (E) of 60 GPa or higher.

6. The optical glass according to any one of claims 1 to 5, having an Abbe number (v_{d}) of 60 or less and a coefficient of thermal expansion α within a range of 50°C to 350°C of 50×10⁻⁷ /K to 150×10⁻⁷ /K.

7. The optical glass according to any one of claims 1 to 6, having a plate shape having a thickness of 0.01 mm to 2 mm.

8. The optical glass according to any one of claims 1 to 7, having a main surface having an area of 8 cm² or more.

9. The optical glass according to any one of claims 1 to 8, wherein when the glass is processed into a glass plate in which both of opposed main surfaces are polished, an LTV of the glass plate for the one of the main surfaces with an area of 25 cm² is 2 µm or less.

10. The optical glass according to any one of claims 1 to 9, wherein a warpage of one main surface for a disk-shaped glass plate having a diameter of 8 inches is 50 µm or less.

11. The optical glass according to any one of claims 1 to 10, having a surface roughness Ra of 2 nm or less.

12. An optical component, comprising the optical glass according to any one of claims 9 to 11, wherein the optical glass has a plate shape.

13. The optical component according to claim 12, wherein the plate-shaped optical glass comprises an antireflection film formed on a surface of the glass.
